(19) **Europäisches Patentamt**
**European Patent Office**
**Office européen des brevets**

(11) **EP 4 580 037 A1**

(12) **EUROPEAN PATENT APPLICATION**

(43) Date of publication:
**02.07.2025 Bulletin 2025/27**

(51) International Patent Classification (IPC):
**H02P 25/032** (2016.01)    **H02P 29/032** (2016.01)
**H02P 29/64** (2016.01)

(21) Application number: **24222905.2**

(22) Date of filing: **23.12.2024**

(52) Cooperative Patent Classification (CPC):
**H02P 25/032; H02P 29/032; H02P 29/64**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.12.2023 JP 2023222062**
**13.11.2024 JP 2024198589**

(71) Applicant: **Nintendo Co., Ltd.**
**Kyoto 601-8501 (JP)**

(72) Inventors:
• **TAMURA, Yoshitaka**
**Kyoto, 601-8501 (JP)**
• **MASUBUCHI, Shoji**
**Kyoto, 601-8501 (JP)**
• **AOKI, Takafumi**
**Kyoto, 601-8501 (JP)**

(74) Representative: **Bardehle Pagenberg**
**Partnerschaft mbB**
**Patentanwälte Rechtsanwälte**
**Prinzregentenplatz 7**
**81675 München (DE)**

(54) **SYSTEM, PROGRAM, INFORMATION PROCESSING METHOD, AND CALIBRATION METHOD**

(57)    A system including a device including a vibration motor includes a thermistor arranged outside the vibration motor and in the vicinity of the vibration motor in the device, temperature measurement processing means configured to perform processing for measuring a temperature with the thermistor, temperature estimation processing means configured to perform processing for obtaining a current value and a voltage value of the vibration motor and estimating a temperature inside the vibration motor based on the obtained current value and voltage value, and restriction means configured to perform processing for restricting vibration of the vibration motor based on a first temperature which is the temperature measured by the temperature measurement processing means and a second temperature which is the temperature estimated by the temperature estimation processing means.

FIG.1

EP 4 580 037 A1

**Description**

The present disclosure relates to a system, a program, an information processing method, and a calibration method.

INTRODUCTION

An information processing system that applies vibration to a user has been known. For example, Japanese Patent Laying-Open No. 2016-202486 discloses a vibration signal generation program that changes a vibration parameter.

SUMMARY

There is a room for improvement in measurement or estimation of a temperature in connection with a vibration motor.

(Configuration 1) According to one embodiment, a system including a device including a vibration motor is provided. The system includes a thermistor arranged outside the vibration motor and in vicinity of the vibration motor in the device, temperature measurement processing means configured to perform processing for measuring a temperature with the thermistor, temperature estimation processing means configured to perform processing for obtaining a current value and a voltage value of the vibration motor and estimating a temperature inside the vibration motor based on the obtained current value and voltage value, and restriction means configured to perform processing for restricting vibration of the vibration motor based on a first temperature which is the temperature measured by the temperature measurement processing means and a second temperature which is the temperature estimated by the temperature estimation processing means.

According to Configuration 1, with the temperature measurement processing means and the temperature estimation processing means, the temperature inside the vibration motor is estimated and the temperature affected by the vibration motor is measured. The vibration motor can be controlled based on results of both of estimation and measurement.

(Configuration 2) In Configuration 1, the restriction means may include first restriction means configured to perform processing for restricting vibration of the vibration motor by comparing the first temperature and a first threshold value and second restriction means configured to perform processing for restricting vibration of the vibration motor by comparing the second temperature and a second threshold value different from the first threshold value.

(Configuration 3) In Configuration 2, the second threshold value may be larger than the first threshold value.

(Configuration 4) In Configuration 2 or 3, details of the processing for restricting vibration by the first restriction means may be different from details of the processing for restricting vibration by the second restriction means.

(Configuration 5) In any of Configurations 1 to 4, in the device, the thermistor and the vibration motor may be arranged on the same side, with a substrate where an electronic component is to be arranged being defined as a reference.

(Configuration 6) In Configuration 5, in the device, the thermistor and the vibration motor may be arranged below the substrate.

(Configuration 7) In any of Configurations 1 to 6, in the device, the thermistor and the vibration motor may be arranged at the same surface of a substrate where an electronic component is to be arranged.

(Configuration 8) In Configuration 7, in the device, a predetermined electronic component may be arranged at an opposite surface of the substrate.

(Configuration 9) In Configuration 8, the predetermined electronic component may include an operation switch.

(Configuration 10) In any of Configurations 7 to 9, the surface on which the thermistor and the vibration motor are arranged may be a rear surface of the substrate.

(Configuration 11) In Configuration 10, the vibration motor may be arranged as being in contact with a rear housing of the device.

(Configuration 12) In Configuration 11, the vibration motor may be in contact with the substrate through a cushion material.

(Configuration 13) In any of Configurations 1 to 12, a cycle of measurement by the temperature measurement processing means may be shorter than a cycle of estimation by the temperature estimation processing means.

(Configuration 14) According to one embodiment, a program configured to cause a computer to function as the temperature measurement processing means, the temperature estimation processing means, and the restriction means according to any of Configurations 1 to 13 is provided.

(Configuration 15) According to one embodiment, an information processing method of controlling a device including a vibration motor is provided. The information processing method includes performing processing for measuring a temperature with a thermistor arranged outside the vibration motor and in vicinity of the vibration motor in the device, performing processing for obtaining a current value and a voltage value of the vibration motor and estimating a temperature inside the vibration motor based on the obtained current value and voltage value, and performing processing for restricting vibration of the vibration motor based on a first temperature which is the measured temperature and a second temperature which is the estimated temperature.

(Configuration 16) In Configuration 15, the restricting vibration may include performing processing for restricting vibration of the vibration motor by comparing the first temperature and a first threshold value and performing processing for restricting vibration of the vibration motor by comparing the second temperature and a second threshold value different from the first threshold value.

(Configuration 17) In Configuration 16, the second threshold value may be larger than the first threshold value.

(Configuration 18) According to one embodiment, a calibration method of calibrating the temperature estimation processing means according to any of Configurations 1 to 13 is provided. The calibration method includes measuring a temperature with the thermistor, obtaining a current value and a voltage value of the vibration motor, calculating a resistance value based on the obtained current value and voltage value, and a calibration step of performing calibration on the temperature measurement processing means based on the measured temperature and the calculated resistance value.

In any configuration above, a single processor does not have to perform all processing, and a plurality of processors may perform the processing in a distributed manner. When a plurality of processors are adopted, the processors may be located in an identical apparatus or in different apparatuses.

In any configuration above, necessary processing may be performed by execution of a single program, or by execution of different programs by a plurality of processors.

The foregoing and other objects, features, aspects, and advantages of the present disclosure will become more apparent from the following detailed description of the present disclosure when taken in conjunction with the accompanying drawings.

BRIEF DESCRIPTION OF THE DRAWINGS

Fig. 1 shows an exemplary illustrative non-limiting drawing illustrating an exemplary configuration of a game system according to the present embodiment.

Fig. 2 shows an exemplary illustrative non-limiting drawing illustrating an exemplary configuration of a game controller according to the present embodiment.

Fig. 3 shows an exemplary illustrative non-limiting drawing illustrating a cross-section along the line III-III in Fig. 2.

Figs. 4A and 4B show exemplary illustrative non-limiting cross-sectional views illustrating an exemplary configuration of the game controller according to the present embodiment.

Fig. 5 shows an exemplary illustrative non-limiting drawing for illustrating processing for generating vibration instruction data in a game device according to the present embodiment.

Fig. 6 shows an exemplary illustrative non-limiting drawing illustrating exemplary frequency characteristics of a maximum allowable voltage in the game system according to the present embodiment.

Fig. 7 shows an exemplary illustrative non-limiting flowchart illustrating exemplary processing by a game program in the game device according to the present embodiment.

Fig. 8 shows an exemplary illustrative non-limiting flowchart illustrating exemplary processing by a system program in the game device according to the present embodiment.

Fig. 9 shows an exemplary illustrative non-limiting flowchart illustrating exemplary processing for generating control data in the game controller according to the present embodiment.

Fig. 10 shows an exemplary illustrative non-limiting flowchart illustrating a modification of the processing for generating control data in the game controller according to the present embodiment.

Fig. 11 shows an exemplary illustrative non-limiting flowchart illustrating temperature estimation processing No. 1 in the game controller according to the present embodiment.

Fig. 12 shows an exemplary illustrative non-limiting flowchart illustrating temperature estimation processing No. 2 in the game controller according to the present embodiment.

Fig. 13 shows an exemplary illustrative non-limiting flowchart illustrating exemplary further detailed processing in processing for determining an order of a low-pass filter (step S221) shown in Fig. 11.

Fig. 14 shows an exemplary illustrative non-limiting flowchart illustrating processing for restricting a vibration motor based on a measured temperature in the game controller according to the present embodiment.

Fig. 15 shows an exemplary illustrative non-limiting graph illustrating an exemplary temperature-resistance value characteristic of the vibration motor according to the present embodiment.

DETAILED DESCRIPTION

The present embodiment will be described in detail with reference to the drawings. The same or corresponding elements in the drawings have the same reference characters allotted and description thereof will not be repeated.

[A. Exemplary System Configuration]

An exemplary configuration of a game system 10 according to the present embodiment will initially be described.

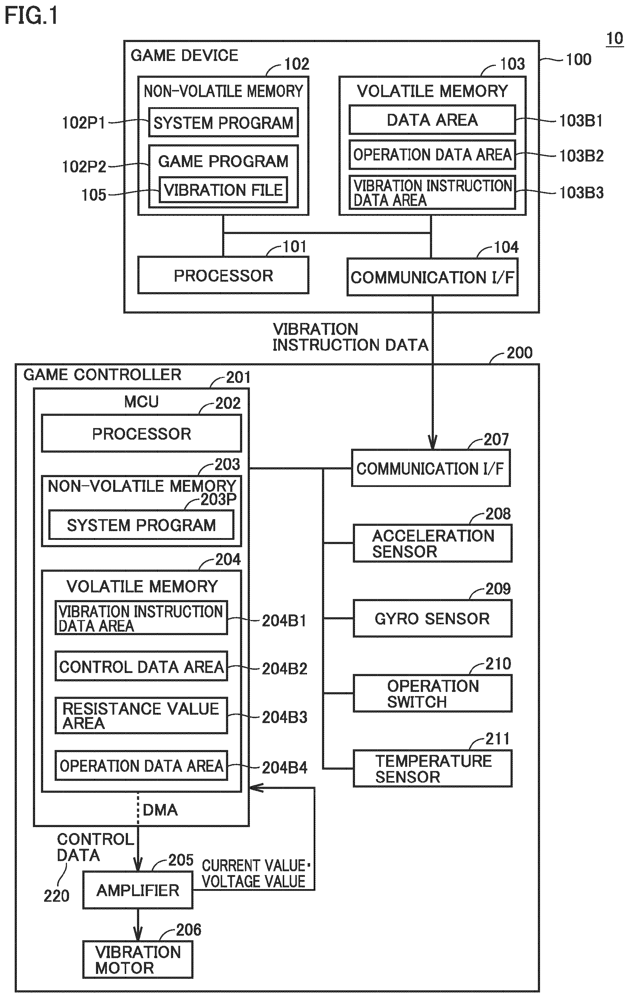

Referring to Fig. 1, game system 10 includes a game device 100 and a game controller 200. Game device 100 executes an application program such as a game program. Game device 100 outputs video images or images generated by execution of the application program to a not-shown display apparatus.

Game controller 200 is an exemplary device, and it receives an operation from a user and transmits operation data showing contents of the received operation to game device 100. Game controller 200 includes a vibration motor 206, and has vibration motor 206 driven in accordance with an instruction from game device 100.

Though Fig. 1 shows an exemplary configuration in which game system 10 includes a single game controller 200, game system 10 may include a plurality of game controllers 200.

Game device 100 includes a processor 101, a non-volatile memory 102, a volatile memory 103, and a communication interface (I/F) 104.

Processor 101 is a processing entity that performs processing in game device 100. Processor 101 is processing circuitry, and it is implemented, for example, by a central processing unit (CPU) and a graphics processing unit (GPU). Processor 101 develops a program stored in non-volatile memory 102 on volatile memory 103 to execute the same. Processor 101 may be implemented by a system on chip (SoC) in which functions of the CPU and the GPU are integrated.

The term "processor" herein encompasses at least processing circuitry that performs processing in accordance with a computer-readable instruction, such as a CPU and a GPU, an SoC in which a plurality of functions are integrated, and hard-wired circuitry such as an application specific integrated circuit (ASIC) and a field programmable gate array (FPGA).

The term "program" herein encompasses a single program and a program group including a plurality of programs.

Non-volatile memory 102 is a storage medium accessible by processor 101, and it is implemented, for example, by a flash memory, a read only memory (ROM), a solid state drive (SSD), and the like. Non-volatile memory 102 may be, for example, a storage medium attachable to and removable from game device 100, such as an optical disc and a cartridge.

A system program 102P1 and a game program 102P2 are stored in non-volatile memory 102.

System program 102P1 includes a computer-readable instruction for performing basic processing such as processing for communication between game device 100 and game controller 200. System program 102P1 may include a library necessary for execution of game program 102P2.

Game program 102P2 includes a computer-readable instruction for performing game processing. Game program 102P2 includes a vibration file 105.

Processing in game device 100 which will be described later is performed by execution of at least one of system program 102P1 and game program 102P2 by processor 101.

Volatile memory 103 is a storage medium accessible by processor 101, and it is implemented, for example, by a dynamic random access memory (DRAM) or the like. While the game processing is being performed, volatile memory 103 includes a data area 103B1 for proceeding of a game, an operation data area 103B2, and a vibration instruction data area 103B3.

Data area 103B1 is an area where data necessary for proceeding of the game is to temporarily be stored. Processor 101 refers to data area 103B1 while game program 102P2 is running and updates data in data area 103B1.

Operation data area 103B2 is an area (buffer) where operation data transmitted from game controller 200 is to temporarily be stored. Processor 101 refers to operation data area 103B2 while game program 102P2 is running.

Vibration instruction data area 103B3 is an area where vibration instruction data for vibration of vibration motor 206 is to temporarily be stored. Processor 101 writes vibration instruction data into vibration instruction data area 103B3 in predetermined cycles (for example, 60 frames per second (fps); approximately 16-msec. cycle) as game program 102P2 runs. Details of the vibration instruction data will be described later.

The term "memory" herein encompasses at least non-volatile memory 102 and volatile memory 103.

Communication interface 104 communicates data with game controller 200 through at least one of wireless communication and wired communication. In wireless communication, communication interface 104 includes, for example, a wireless chip in conformity with Bluetooth® standards. In wired communication, communication interface 104 includes, for example, a wired communication controller in conformity with communication standards of universal serial bus (USB).

Game controller 200 includes a micro controller unit (MCU) 201 as an exemplary processor, an amplifier 205, vibration motor 206, a communication interface (I/F) 207, an acceleration sensor 208, a gyro sensor 209, an operation switch 210, and a temperature sensor 211.

Game controller 200 is typically held with both hands or one hand of the user and receives an operation by the user as a result of operation on operation switch 210 with a user's finger. Game controller 200 is not limited to a game controller in such a form as being held by the user. For example, a general-purpose keyboard and/or mouse including vibration motor 206 may be applicable, or the game controller may be laid on a floor and receive input based on touch of a sole of the user.

MCU 201 includes a processor 202, a non-volatile memory 203, and a volatile memory 204.

Processor 202 is a processing entity that performs processing in game controller 200. Processor 202 develops a program stored in non-volatile memory 203 on volatile memory 204 to execute the same. Since processor 202 is similar in hardware configuration to processor 101 described above, detailed description will not be repeated.

A system program 203P is stored in non-volatile memory 203. Since non-volatile memory 203 is similar in hardware configuration to non-volatile memory 102 described above, detailed description will not be repeated.

Volatile memory 204 includes a vibration instruction data area 204B1, a control data area 204B2, a resistance value area 204B3, and an operation data area 204B4 while processing in game controller 200 is being performed. Since volatile memory 204 is similar in hardware configuration to volatile memory 103 described above, detailed description will not be repeated.

Vibration instruction data area 204B1 is an area (first-in first-out (FIFO) buffer) where the vibration instruction data transmitted from game device 100 is to temporarily be stored.

Control data area 204B2 is an area (an FIFO buffer) where control data for vibration of vibration motor 206 generated by processor 202 is to temporarily be stored. As will be described later, in the present embodiment, the control data is generated based on the vibration instruction data.

Operation data area 204B4 is an area (buffer) where detection values from acceleration sensor 208, gyro sensor 209, operation switch 210, and the like are to temporarily be stored. Operation data is generated based on data stored in operation data area 204B4.

Resistance value area 204B3 is an area where a resistance value calculated based on values of a current and a voltage supplied by amplifier 205 to vibration motor 206 is to temporarily be stored.

Though Fig. 1 shows an exemplary configuration in which MCU 201 including processor 202, non-volatile memory 203, and volatile memory 204 is employed, a configuration in which each element is independent may be adopted.

Amplifier 205 supplies electric power to vibration motor 206 in accordance with control data 220. Amplifier 205 may supply a pulse width modulation (PWM) signal at a predetermined carrier frequency (for example, 8 kHz) to vibration motor 206. Amplifier 205 determines a duty ratio based on control data 220 and generates the PWM signal every operation cycle (1.8 kHz = 0.125 ms) corresponding to one carrier. Control data 220 stored in control data area 204B2 in volatile memory 204 is written in amplifier 205, for example, in predetermined cycles by direct memory access (DMA).

Vibration motor 206 is, for example, an eccentric motor where a weight eccentric in shape is attached to a rotation shaft. As vibration motor 206 rotates, vibration is generated. Vibration motor 206 may be a linear motor, a coin vibration motor, or the like. Vibration motor 206 can thus apply vibration to the user who holds game controller 200 where vibration motor 206 is accommodated. In game controller 200 in the present embodiment, vibration motor 206 is a voice coil motor capable of outputting audible sound.

Communication interface 207 communicates data with game device 100 through at least one of wireless communication and wired communication. Since communication interface 207 is similar in hardware configuration to communication interface 104 described above, detailed description will not be repeated. A cycle of communication between communication interface 104 and communication interface 207 may be variable based on a command or the like from processor 101 and/or processor 202.

Acceleration sensor 208 detects magnitude of a linear acceleration along directions along predetermined three axes. Acceleration sensor 208 may detect an acceleration in a direction along one axis or directions along two axes.

Gyro sensor 209 detects an inclination, an angular velocity, an angular acceleration, and the like of game controller 200.

Operation switch 210 is implemented by at least one button, key, or stick provided at a surface of game controller 200. Operation switch 210 may typically be implemented by a button brought in correspondence with a character such as an A button and a B button, a cross-shaped key for input of upward, downward, left, and right directions, a 3D stick for input of a direction of inclination and an amount of inclination, or the like.

Temperature sensor 211 is a sensor that measures an internal temperature of game controller 200. Temperature sensor 211 is implemented, for example, by a thermistor. Temperature sensor 211 may be a thermocouple or the like. In game controller 200, temperature sensor 211 may be arranged outside vibration motor 206 and in the vicinity of vibration motor 206 (an exemplary structure will be described later). When temperature sensor 211 is arranged at a location which is also the vicinity of the MCU, it can sense increase in temperature of both of vibration motor 206 and MCU 201.

A not-shown one or more peripheral devices may be connectable to game controller 200. In this case, game controller 200 may include an interface for connection to the peripheral device.

System program 203P includes a computer-readable instruction for performing processing necessary in game controller 200. System program 203P includes computer-readable instructions for performing in parallel, a plurality of types of processing such as (1) processing for generating control data 220 to be provided to amplifier 205 based on the vibration instruction data received from game device 100, (2) processing for estimating a temperature of vibration motor 206 and restricting vibration of vibration motor 206 based on the estimated temperature, (3) processing for restricting vibration of vibration motor 206 based on the temperature measured by temperature sensor 211, (4) processing for filtering detection values from acceleration sensor 208 and gyro sensor 209, (5) processing for calculating a posture based on the detection values from acceleration sensor 208 and gyro sensor 109, and (6) processing for communication between game controller 200 and game device 100. At least one or all of the processing (1) to the processing (6) may be computer-readable instructions independent of one another. In other words, system program 203P may be an assembly of software prepared for each type of processing.

Processing for communication between game device 100 and game controller 200 includes processing for transmitting operation data including detection values from acceleration sensor 208, gyro sensor 109, operation switch 210, and the like to game device 100 and processing for receiving the vibration instruction data from game device 100.

[B. Exemplary Structure of Game Controller 200]

An exemplary structure of game controller 200 will now be described.

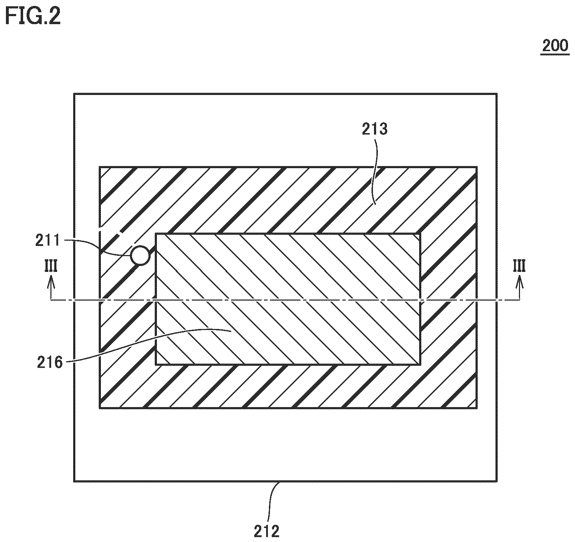

Referring to Fig. 2, inside a housing 212 of game controller 200, a substrate 213 on which an electronic component is arranged and a vibration module 216 are arranged. Vibration module 216 includes vibration motor 206. Temperature sensor 211 is arranged in the vicinity of vibration module 216 (or vibration motor 206).

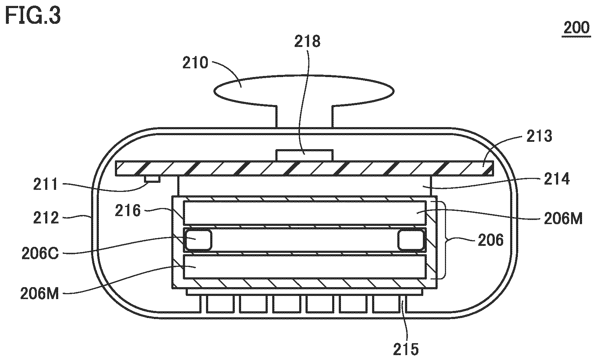

Referring to Fig. 3, game controller 200 is provided with a button which is an exemplary operation switch 210, as projecting from a front surface. At a surface of substrate 213 opposed to the front surface, a detection circuit 218 that detects an operation by a user on operation switch 210 (a button in this example) is arranged. The electronic component may thus include operation switch 210 and the corresponding detection circuit.

On a rear surface of substrate 213, vibration module 216 is arranged. Vibration module 216 is arranged to be in contact with housing 212 on the rear surface of game controller 200. In the exemplary configuration shown in Fig. 3, vibration module 216 is bonded to housing 212 on the rear surface with a double-sided tape. Vibration module 216 is fixed to a rib 215 formed integrally with housing 212. A fixing method may be a method other than bonding.

A cushion material 214 is arranged in a gap between vibration module 216 and substrate 213. In other words, vibration module 216 is in contact with substrate 213 through cushion material 214. Cushion material 214 is fitted in the gap. Vibration module 216 and substrate 213 are thus in contact with each other under a pressure. In a modification, a heat radiation sheet may be employed instead of cushion material 214.

In the exemplary configuration shown in Fig. 3, vibration module 216 and cushion material 214 are not fixed to each other and cushion material 214 and the substrate are not fixed to each other. In a modification, vibration module 216 may be mounted or fixed on (for example, bonded with any method) substrate 213. In another modification, vibration module 216 does not have to be in contact with substrate 213.

Vibration motor 206 included in vibration module 216 includes a pair of magnets 206M which are vibrators and a coil 206C which is a stator. Magnet 206M may be a stator and coil 206C may be a vibrator.

Temperature sensor 211 is, for example, a thermistor in a form of a chip, and mounted on substrate 213. Temperature sensor 211 may be arranged near vibration module 216 so long as it does not interfere with arrangement of another electronic component at substrate 213. Temperature sensor 211 is arranged at a position where it can accurately measure an internal temperature of vibration module 216 while the module is in a standstill.

Temperature sensor 211 may be arranged without being in contact with substrate 213.

As shown in Fig. 3, in game controller 200, temperature sensor 211 and vibration module 216 (or vibration motor 206) may be arranged at the same side, with substrate 213 being defined as the reference. Temperature sensor 211 and vibration module 216 (or vibration motor 206) may be arranged below substrate 213 (the rear surface of housing 212). The surface where temperature sensor 211 and vibration module 216 (or vibration motor 206) are arranged can also be defined as a surface on the rear surface of game controller 200, of surfaces of substrate 213.

Temperature sensor 211 and vibration module 216 (or vibration motor 206) can also be defined as being arranged at the same surface of substrate 213. At this time, a predetermined electronic component may be arranged at an opposite surface of substrate 213.

In exemplary design of a position of arrangement of temperature sensor 211, temperature sensor 211 may be arranged, for example, within 5 mm or within 1 cm from an outer edge of vibration module 216.

In another exemplary design of a position of arrangement of temperature sensor 211, temperature sensor 211 may be arranged, for example, at a position within 1/10, 1/5, or 1/3 of a longitudinal length and a lateral length (both in a plan view shown in Fig. 2) of vibration module 216.

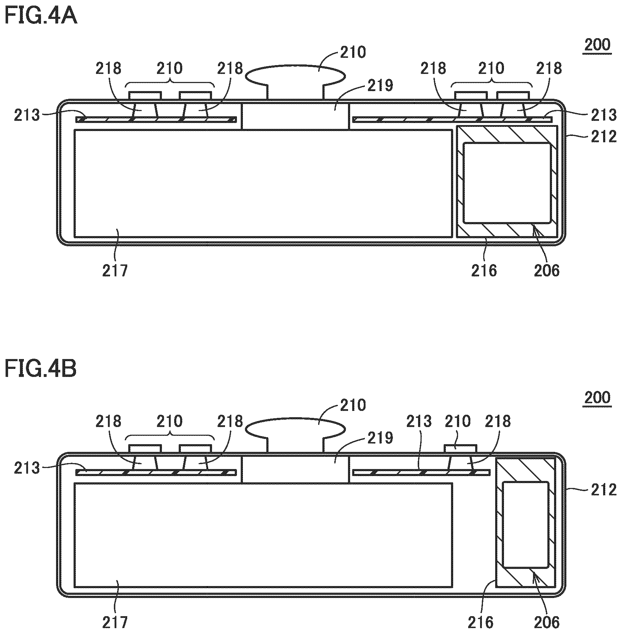

An exemplary cross-sectional structure of game controller 200 according to the present embodiment will be described with reference to Figs. 4A and 4B. In the exemplary configuration shown in Fig. 4A, at the front surface of game controller 200, a button and a stick are arranged by way of example of operation switch 210. On substrate 213 arranged inside housing 212, detection circuit 218 brought in correspondence with each button and a detection circuit 219 brought in correspondence with the stick are arranged.

A battery 217 and vibration module 216 are arranged as being aligned between substrate 213 and a back surface of housing 212. Vibration module 216 can also be defined as being provided on a back surface of substrate 213.

At substrate 213 opposite to a side where vibration module 216 is arranged, such an electronic component as detection circuits 218 and 219 may be arranged. Vibration module 216 may be arranged lateral to battery 217.

In the exemplary configuration shown in Fig. 4B, vibration module 216 is arranged at an end side inside housing 212. A thickness of vibration module 216 is comparable to a length from the front surface toward the back surface inside housing 212.

Since the exemplary configuration shown in Fig. 4A is larger in surface area of substrate 213 than the exemplary configuration shown in Fig. 4B, a larger mount area can be secured. The exemplary configuration shown in Fig. 4B, on the other hand, can secure a larger thickness of vibration motor 206 included in vibration module 216 than the exemplary configuration shown in Fig. 4B.

[C. Vibration Instruction Data]

The vibration instruction data transmitted from game device 100 to game controller 200 will now be described.

The vibration instruction data is data that indicates a vibration effect. The vibration instruction data is, for example, data that designates a waveform of the control data for control of vibration at certain timing. Vibration instruction data 116 includes at least one vibration parameter that indicates the waveform of the control data. Vibration instruction data 116 may include a set of an amplitude parameter and a frequency parameter by way of example of a vibration parameter.

In the present embodiment, the vibration effect for a period of $T \times N$ (msec.) is designated by designation of at least one (N) piece of vibration instruction data 116 every vibration instruction cycle T (msec.) in a chronological order. N pieces of vibration instruction data 116 designated in the chronological order will also be referred to as a "time-series vibration instruction data group" below. For example, a vibration instruction cycle T may be set to T = 5 msec.

By adopting such a data format, the vibration effect that varies in amplitude value and frequency can readily be designated.

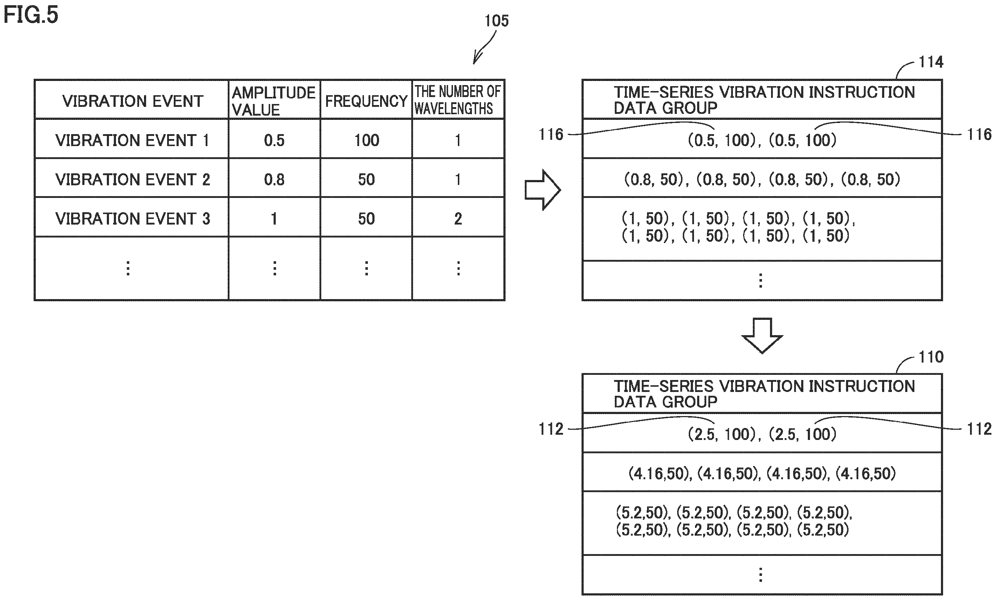

Referring to Fig. 5, exemplary processing for generating a time-series vibration instruction data group 110 will be described. Vibration file 105 includes information for indicating the vibration effect for each vibration event.

More specifically, in vibration file 105, a wavelength number parameter in addition to the vibration parameter (the amplitude parameter and the frequency parameter) is set for each vibration event. The wavelength number parameter is used for determining the number of vibration parameters to be included in a time-series vibration parameter group.

For example, in a vibration event 1, the frequency is set to "100 Hz" and the wavelength number parameter is set to "1". Therefore, the vibration effect corresponding to the vibration event 1 lasts for a period of 10 msec. which is comparable to one wavelength of 100 Hz. Consequently, time-series vibration instruction data group 110 that indicates the vibration effect corresponding to the vibration event 1 includes two pieces of vibration instruction data. In other words, time-series vibration instruction data group 110 includes the vibration instruction data over two vibration instruction cycles.

In vibration file 105 shown in Fig. 5, the amplitude parameter in amplitude instruction data is normalized to 0 to 1. As a result of execution of game program 102P2, vibration instruction data 116 (a time-series vibration instruction data group 114) including the normalized amplitude parameter is generated. As a result of execution of system program 102P1, the amplitude parameter in vibration instruction data 116 is multiplied by a maximum allowable voltage in accordance with the frequency, so that vibration instruction data 112 is generated. The amplitude parameter in vibration instruction data 112 indicates a voltage amplitude value. Generated vibration instruction data 112 (time-series vibration instruction data group 110) is written in vibration instruction data area 103B3 (see Fig. 1).

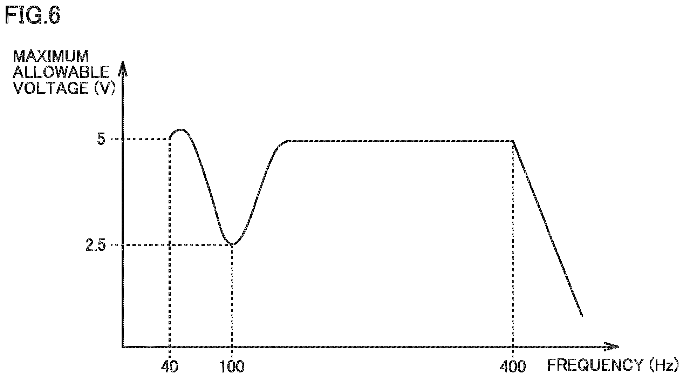

Referring to Fig. 6, exemplary frequency characteristics of the maximum allowable voltage will be described. A maximum voltage (maximum allowable voltage) applicable to vibration motor 206 is different for each frequency. System program 102P1 can refer to the frequency characteristics of the maximum allowable voltage as shown in Fig. 6.

According to such a configuration, the maximum allowable voltage can conveniently be used for each frequency to also increase an amount of vibration of vibration motor 206. Since time-series vibration instruction data group 110 can be generated without consideration of specifications or the like of vibration motor 206, implementation of game program 102P2 can be facilitated.

Though exemplary processing in which time-series vibration instruction data group 110 (one or more pieces of vibration instruction data 112) is generated each time based on vibration file 105 is shown in the description above, time-series vibration instruction data group 110 (one or more pieces of vibration instruction data 112) may be prepared in advance as data in a file format. In this case, processor 101 may read the data each time, while game program 102P2 is running. Since the necessity for processing for generating time-series vibration instruction data group 110 each time is obviated by using such data in the file format, implementation of game program 102P2 can be facilitated. Vibration instruction data 112 may be generated in real time without using vibration file 105.

Though exemplary processing using the vibration instruction data that designates vibration at certain timing is shown in the description above, variation instruction data that designates variation from immediately preceding vibration may be adopted. The variation instruction data shows an amount of change in amplitude value and frequency, for example, as compared to the vibration parameter in an immediately preceding vibration instruction cycle. In this case, the vibration parameter in the present vibration instruction cycle is calculated based on the vibration parameter in the immediately preceding vibration instruction cycle and the amount of change in amplitude value and frequency. Though such processing for calculating the vibration parameter may be performed by processor 101 of game device 100, the entirety or a part of the processing may be performed by MCU 201 of game controller 200.

Though exemplary processing in which vibration instruction data 116 including the normalized amplitude parameter is generated by execution of game program 102P2 by processor 101 is shown in the description above, vibration instruction data 112 (time-series vibration instruction data group 110) including the amplitude parameter that indicates the voltage amplitude value may directly be generated by execution of the game program.

When time-series vibration instruction data group 110 (one or more pieces of vibration instruction data 112) is stored in vibration instruction data area 103B3, a predetermined number of pieces of vibration instruction data 112 are sequentially transmitted from game device 100 to game controller 200 every cycle (for example, 5 msec.) of communication between communication interface 104 and communication interface 207.

[D. Exemplary Processing in Game Device 100]

Exemplary processing in game device 100 will now be described.

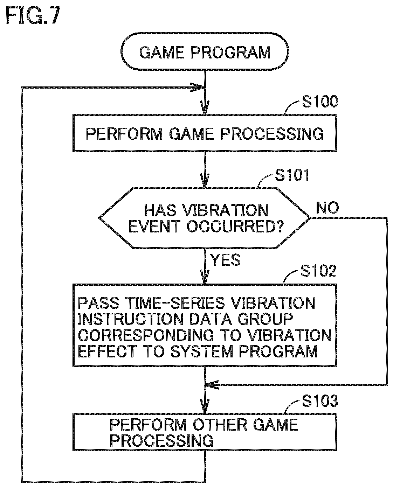

Exemplary processing by game program 102P2 in game device 100 will be described with reference to Fig. 7. Each step shown in Fig. 7 is performed by execution of game program 102P2 by processor 101 of game device 100. Though game program 102P2 may be, for example, an action game, the type of the game is not limited.

Processor 101 performs game processing (step S100). The game processing includes processing for determining a status of a game character based on operation data, processing for generating an image to be outputted to the display apparatus, or the like.

Processor 101 determines whether or not the vibration event has occurred as the game processing is performed (step S101). The vibration event is a trigger for application of vibration to the user, and it is, for example, an event such as collision of a game object against another game object or explosion in a virtual space. The vibration event may be an event that occurs at predetermined timing. The vibration event occurs when a predetermined condition is satisfied as the game proceeds.

When the vibration event has occurred (YES in step S101), processor 101 passes time-series vibration instruction data group 114 corresponding to the vibration effect to system program 102P1 (step S102). When the vibration event has not occurred (NO in step S101), processing in step S102 is skipped.

Processor 101 performs other game processing (step S103). Processing in steps S100 to S103 is repeated until a condition for quitting the game processing is satisfied.

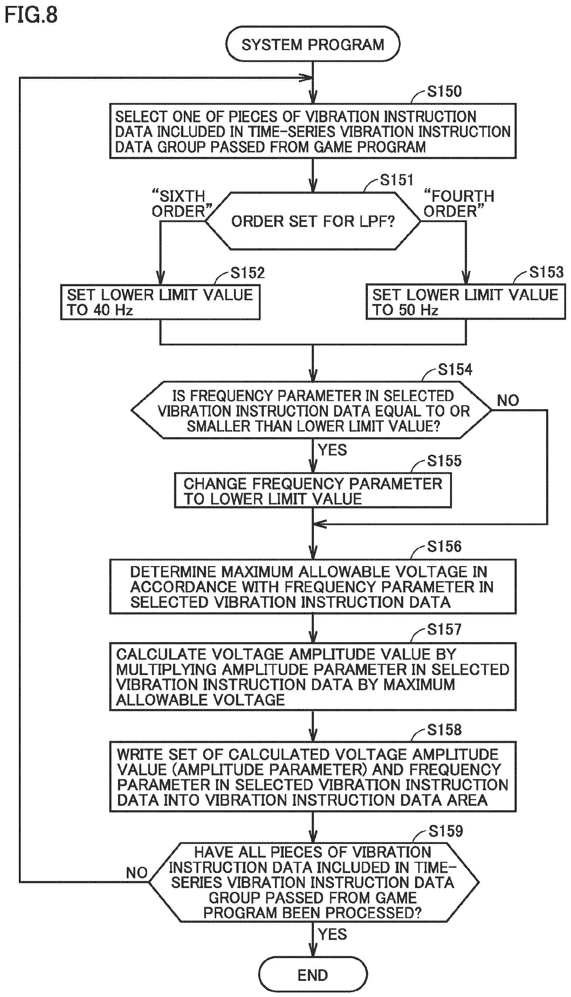

Exemplary processing by system program 102P1 in game device 100 will be described with reference to Fig. 8. Each step shown in Fig. 8 is performed by execution of system program 102P1 by processor 101 of game device 100.

Processor 101 of game device 100 executes system program 102P1 to generate time-series vibration instruction data group 114 that indicates a waveform not lower than a predetermined frequency for driving vibration motor 206 in accordance with an instruction generated by execution of an application program (game program 102P2).

Processor 101 selects one of pieces of vibration instruction data 116 included in time-series vibration instruction data group 114 passed from game program 102P2 (step S150). Processor 101 then determines an order that has been set for a low-pass filter (which will also be abbreviated as "LPF" below) of game controller 200 (step S151). As will be described later, the order of the LPF of game controller 200 is changeable, and an example in which the order is set to the fourth order or the sixth order will be described by way of example. The order of the LPF may be set or changed to any value.

In an example where the order of the LPF of game controller 200 has been set to the sixth order ("sixth order" in step S151), processor 101 sets a lower limit value of the frequency parameter indicated in time-series vibration instruction data group 114 transmitted to game controller 200 to 40 Hz (step S152).

In an example where the order of the LPF of game controller 200 has been set to the fourth order ("fourth order" in step S151), processor 101 sets a lower limit value of the frequency parameter to 50 Hz (step S153). In the example where the order of the LPF is set to the fourth order, the lower limit value of the frequency parameter is set to be larger by a predetermined value (for example, 10 Hz) than in the example where the order of the LPF is set to the sixth order. Thus, when the order of the LPF is changed, a margin may be added to a certain range within which the frequency parameter is restricted.

Processor 101 then determines whether or not the frequency parameter in selected vibration instruction data 116 is equal to or smaller than the lower limit value (step S154).

When the frequency parameter is equal to or smaller than the lower limit value (YES in step S154), processor 101 changes the frequency parameter to the lower limit value (step S155). When the frequency parameter is not equal to or smaller than the lower limit value (NO in step S154), processing in step S155 is skipped.

Processing in steps S150 to S155 is processing for restricting the lower limit value of the frequency parameter indicated in time-series vibration instruction data group 114 transmitted to game controller 200. Forty hertz or fifty hertz may be an exemplary lower limit frequency allowed in the control data. The lower limit frequency can freely be set depending on amplifier 205 and vibration motor 206 of game controller 200. Specifically, in the present embodiment, the frequency characteristics of vibration motor 206 are such that effective vibration is achieved at a frequency higher than approximately 40 Hz and vibration is quite weak when the frequency lowers, for example, to 30 Hz. Therefore, the lower limit frequency that can be used in a game application is set to 40 Hz or 50 Hz.

In step S152, the amplitude parameter may be set to 0. By adopting such processing, the frequency parameter in vibration instruction data 116 is not reflected on processing and hence the instruction is canceled or deactivated.

Processing in steps S150 to S155 may be included in game program 102P2, rather than system program 102P1.

Processor 101 determines the maximum allowable voltage in accordance with the frequency parameter in selected vibration instruction data 116 (step S156). Processor 101 calculates the voltage amplitude value by multiplying the amplitude parameter (0 to 1) in selected vibration instruction data 116 by the maximum allowable voltage (step S157). Processor 202 thus determines the amplitude value in vibration control data 220 based on change of a maximum amplitude value in accordance with the frequency in the instruction for vibration of vibration motor 206.

Processor 101 writes a set of the calculated voltage amplitude value (amplitude parameter) and the frequency parameter in selected vibration instruction data 116 into vibration instruction data area 103B3 (step S158). The one or more written sets correspond to time-series vibration instruction data group 110 (vibration instruction data 112).

Processor 101 determines whether or not it has processed all pieces of vibration instruction data 116 included in time-series vibration instruction data group 114 passed from game program 102P2 (step S159). When all pieces of vibration instruction data 116 included in time-series vibration instruction data group 114 passed from game program 102P2 have not been processed (NO in step S159), processing in step S150 or later is repeated.

When all pieces of vibration instruction data 116 included in time-series vibration instruction data group 114 passed from game program 102P2 have been processed (YES in step S159), the process ends.

The processing shown in Fig. 8 may repeatedly be performed in predetermined cycles or may be performed by being triggered by a predetermined condition being satisfied (for example, passing of time-series vibration instruction data group 114 from game program 102P2).

[E. Temperature Estimation Processing]

Temperature estimation processing according to the present embodiment will now be described.

Game system 10 according to the present embodiment includes a system for estimating a temperature inside vibration motor 206 implemented by the voice coil motor. For example, game controller 200 (processor 202) obtains a current value and a voltage value of vibration motor 206 and estimates the temperature inside vibration motor 206 based on the obtained current value and voltage value. More specifically, amplifier 205 obtains a current value and a voltage value of vibration motor 206 and outputs them to the MCU. Of these current value and voltage value, based on the current value and the voltage value generated by a signal corresponding to a measurement wave, the resistance value and/or the temperature are/is calculated.

The "measurement wave" herein is a signal or a waveform for estimation of the temperature of vibration motor 206. The measurement wave is used for measurement of the resistance value of vibration motor 206. Though the measurement wave is typically a sinusoidal wave, it may have another waveform.

The temperature estimated in the temperature estimation processing represents the temperature inside vibration motor 206, and it can be used, for example, for prevention of thermal degradation of vibration motor 206. The temperature measured by temperature sensor 211 represents the temperature outside vibration motor 206 and correlates with an internal temperature of game controller 200 and/or a surface temperature of game controller 200.

Though the temperature estimation system according to the present disclosure is implemented by processing on a side of game controller 200, a part or the entirety thereof may be implemented by processing on a side of game system 10.

Game system 10 according to the present embodiment includes a control system that controls vibration motor 206 implemented by the voice coil motor. For example, game controller 200 (or processor 202) can restrict vibration of vibration motor 206 based on the estimated temperature of vibration motor 206.

Restriction of vibration of vibration motor 206 includes not carrying out vibration control based on the vibration instruction data. For example, the amplitude parameter in the vibration instruction data may be changed to zero. As the amplitude parameter is changed to zero, vibration motor 206 is stopped. As vibration motor 206 is stopped, vibration is not generated.

Restriction of vibration of vibration motor 206 includes vibration control to set the amount of vibration suppressed as compared with the amount of vibration indicated in the vibration instruction data. For example, the amplitude value indicated by the vibration parameter in the vibration instruction data may be decreased by a predetermined value or a predetermined degree or may be changed to a predetermined smaller amplitude value. Restriction of vibration of vibration motor 206 may include at least one of lowering in input voltage to vibration motor 206 and decrease in amount of vibration of vibration motor 206. The amount of vibration may also be rephrased as strength of vibration.

Restriction of vibration of vibration motor 206 includes processing for shifting the frequency of the waveform for driving vibration motor 206 to a frequency higher in vibration efficiency than the frequency indicated in the vibration instruction data.

The control system according to the present disclosure may be configured with at least a part of game system 10, without being limited to game controller 200 alone.

[F. Exemplary Processing in Game Controller 200]

Exemplary processing in game controller 200 will now be described.

(f1: Processing for Generating Control Data 220)

In game controller 200, control data 220 is generated. Control data 220 is data to be inputted to amplifier 205 to control vibration of vibration motor 206. More specifically, time-series vibration instruction data group 110 is transmitted from game device 100 to game controller 200, and processor 202 of game controller 200 generates control data 220 based on time-series vibration instruction data group 110. Control data 220 is typically data that shows the voltage value of the waveform for driving vibration motor 206 and is outputted or updated in predetermined cycles. Control data 220 may be data that shows an instantaneous value of the voltage in each cycle. The cycle of output or update of control data 220 will also be referred to as a "control cycle" below.

Though the control cycle may be as long as the vibration instruction cycle (for example, 5 msec.), finer control can be realized by making the control cycle shorter than the vibration instruction cycle. In generation of control data 220 in a cycle shorter than the vibration instruction cycle, the control data is generated on the side of game controller 200 so that finer control can be realized while an amount of communication between game device 100 and game controller 200 is reduced. For example, the control cycle may be set to 1/40 of the vibration instruction cycle (for example, 5 msec.). In other words, the control cycle may be set to 0.125 msec.

Control data 220 indicates the waveform of vibration (sinusoidal wave). Control data 220 may indicate a rectangular wave or may indicate another waveform depending on a system configuration. Rather than supply of a PWM signal obtained by PWM of the waveform of vibration indicated by control data 220 to vibration motor 206, electric power obtained by amplification of the waveform of vibration indicated in control data 220 as it is may be supplied to vibration motor 206.

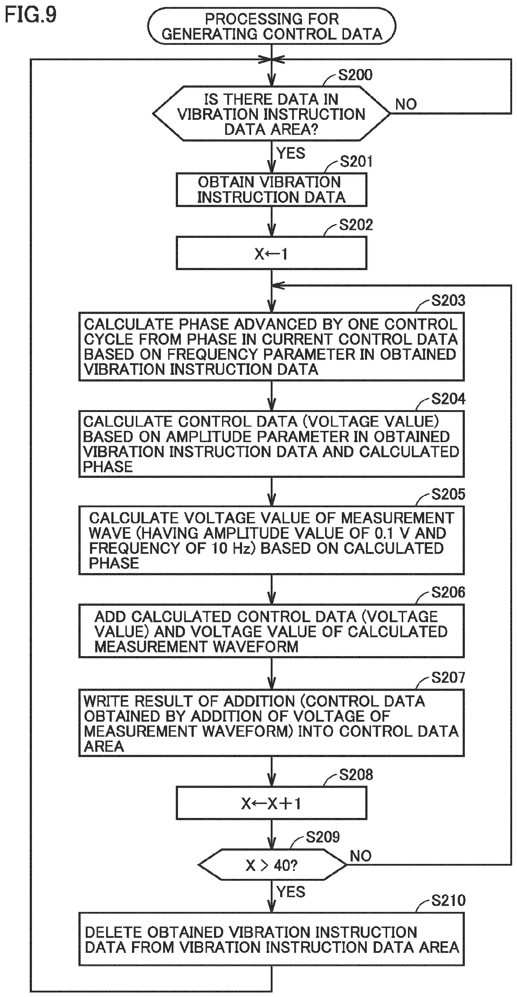

Exemplary processing for generating control data 220 in game controller 200 will be described with reference to Fig. 9. Each step shown in Fig. 9 is performed by execution of system program 203P by processor 202 of game controller 200. Processing shown in Fig. 9 may repeatedly be performed in predetermined cycles (for example, vibration instruction cycles).

Processor 202 determines whether or not there is data in vibration instruction data area 204B1 (step S200). When there is no data in vibration instruction data area 204B1 (NO in step S200), processing in step S200 is repeated.

When there is data in vibration instruction data area 204B1 (YES in step S200), processor 202 obtains vibration instruction data 112 (step S201). At this time, of pieces of data stored in vibration instruction data area 204B1, vibration instruction data 112 at the top (oldest) is obtained.

Processor 202 sets an index X to one (step S202). Processor 202 calculates the phase advanced by one control cycle (0.125 msec.) from the phase of current control data (previously calculated control data) based on the frequency parameter in obtained vibration instruction data 112 (step S203). Processor 202 calculates the control data (voltage value) based on the amplitude parameter in obtained vibration instruction data 112 and the phase calculated in step S203 (step S204).

Immediately after vibration instruction data 112 is newly obtained, the amplitude parameter and the frequency parameter may greatly vary. In such a case, the value of at least one of the amplitude parameter (step S204) and the frequency parameter (step S203) may gradually be varied from the immediately preceding value to the indicated value, rather than application of the indicated value as it is.

Processor 202 calculates the voltage value of the measurement wave (for example, having the amplitude value of 0.1 V and the frequency of 10 Hz) based on the phase calculated in step S203 (step S205). Processor 202 thus generates the measurement wave for estimation of the temperature inside vibration motor 206.

Processor 202 adds the voltage value of the measurement wave calculated in step S205 and the control data (voltage value) calculated in step S204 (step S206) to each other. Processor 202 thus generates superimposed control data by superimposing the measurement wave on the control data for vibration of vibration motor 206 implemented by the voice coil motor. The superimposed control data shows the waveform obtained by superimposition of the measurement wave on the waveform in vibration instruction data 112 for driving vibration motor 206.

Processor 202 writes a result of addition (the superimposed control data obtained by superimposition of the voltage of the measurement wave on the control data) into control data area 204B2 (step S207). Processor 202 thus inputs the result of addition (the superimposed control data obtained by superimposition of the voltage of the measurement wave on the control data) to vibration motor 206 implemented by the voice coil motor. Amplifier 205 drives vibration motor 206 based on the result of addition written in control data area 204B2.

Processor 202 increments index X by one (step S208). Processor 202 determines whether or not incremented index X has exceeded forty (step S209).

When incremented index X has not exceeded forty (= vibration instruction cycle/control cycle) (NO in step S209), processing in step S203 or later is repeated. When incremented index X has exceeded forty (YES in step S209), processor 202 deletes vibration instruction data 112 obtained in step S201 from vibration instruction data area 204B1 (step S210). Processing in step S200 or later is then repeated.

In exemplary processing for generating control data 220 according to the present embodiment, the measurement wave at the frequency (for example, 10 Hz) lower than an audible range (for example, 20 Hz to 20,000 Hz) is adopted, and hence hearing from the voice coil motor, of sound resulting from the measurement wave can be avoided. In addition, even when a high frequency cannot be generated and the measurement wave higher than the audible range cannot be used due to processing capability of the processor, the temperature can be estimated. Furthermore, the temperature inside vibration motor 206 can be estimated with less influence on vibration applied to the user.

The frequency of the measurement wave may be set to any frequency, for example, lower than 40 Hz (the lower limit value of the frequency parameter which can be used by the application), without being limited to 10 Hz. In other words, the measurement wave lower than the lower limit frequency in the control data for vibration of vibration motor 206 implemented by the voice coil motor may be adopted. From another point of view, any frequency lower than the audible range may be adopted. The frequency of the measurement wave may be set to 20 Hz or lower, and may be set, for example, to 20 Hz, 15 Hz, or the like, or to 10 Hz or lower. The frequency not higher than 20 Hz may thus be set as the frequency of the measurement wave.

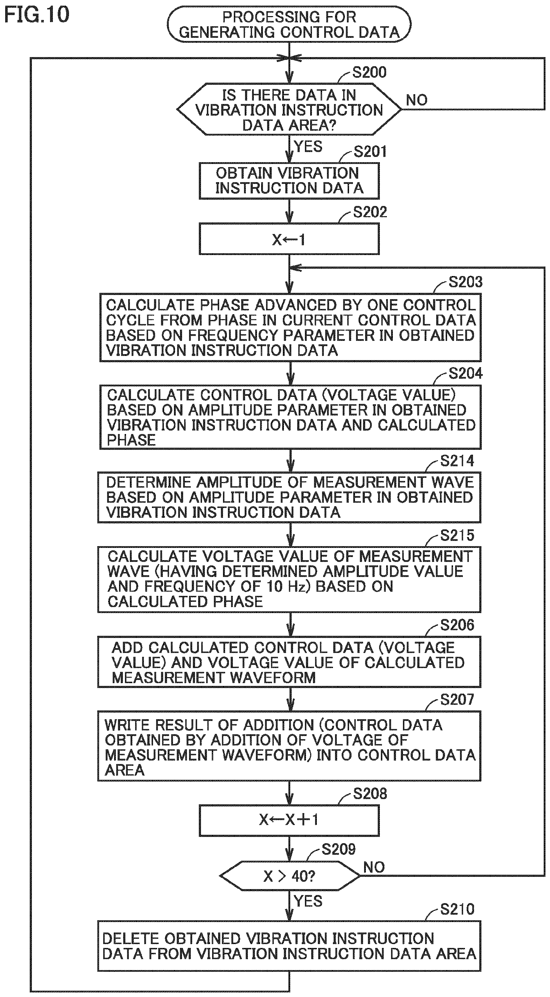

Though the amplitude value of the measurement wave is constant (for example, 0.1 V) in the exemplary generation processing shown in Fig. 9, the amplitude value of the measurement wave may be determined based on the amplitude parameter in vibration instruction data 112. In this case, typically, when the amplitude parameter in vibration instruction data 112 is large, the amplitude value of the measurement wave may be large, and when the amplitude parameter in vibration instruction data 112 is small, the amplitude value of the measurement wave may be small. Fig. 10 is a flowchart that implements this modification.

A modification of the processing for generating control data 220 in game controller 200 will be described with reference to Fig. 10. Each step shown in Fig. 10 is performed by execution of system program 203P by processor 202 of game controller 200. In the modification shown in Fig. 10, steps S214 and S215 are adopted instead of step S205 in the exemplary generation processing shown in Fig. 9.

Processor 202 determines the amplitude value of the measurement wave based on the amplitude parameter in obtained vibration instruction data 112 (step S214). Processor 202 thus determines the amplitude value of the measurement wave in accordance with the amplitude value in the control data.

Specifically, for the sake of illustration, for example, when the amplitude parameter in vibration instruction data 112 is equal to or higher than 3 V, the amplitude value of the measurement wave may be set to 0.2 V, and when the amplitude parameter in vibration instruction data 112 is lower than 3 V, the amplitude value of the measurement wave may be set to 0.1 V. Alternatively, a value calculated by multiplying the amplitude parameter in vibration instruction data 112 by a predetermined ratio (for example, 5% or the like) may be determined as the amplitude value of the measurement wave.

Processor 202 calculates the voltage value of the measurement wave based on the phase calculated in step S203 so as to generate the measurement wave (having the amplitude value determined in step S214 and the frequency of 10 Hz) (step S215). Processor 202 thus adaptively determines the voltage value of the measurement wave for estimation of the temperature of vibration motor 206.

Since processing other than that in steps S214 and S215 is similar to corresponding processing in Fig. 9, detailed description will not be repeated.

Accuracy in estimation of the temperature is improved as the amplitude value of the measurement wave is larger. When the amplitude value of the measurement wave becomes too large, however, the user may have an unintended feeling. By dynamically changing the amplitude value of the measurement wave in accordance with magnitude of the amplitude value for vibration to basically be applied to the user as described above, accuracy in estimation of the temperature can be improved and unintended feeling of the measurement wave felt by the user can be lessened.

(f2: Temperature Estimation Processing and Vibration Motor Restriction Processing)

In game controller 200, the temperature of vibration motor 206 is estimated based on the current value and the voltage value of vibration motor 206. Vibration of vibration motor 206 may be restricted based on the estimated temperature.

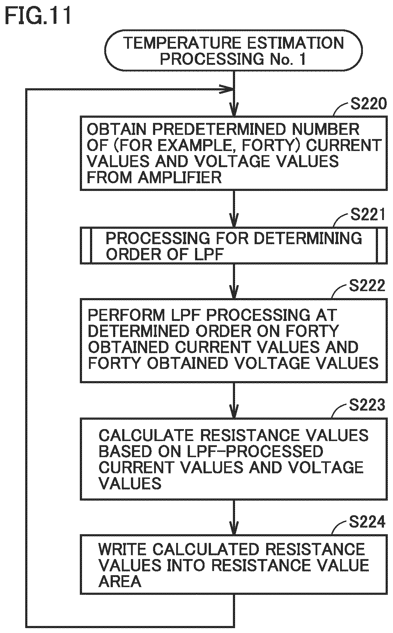

Temperature estimation processing No. 1 in game controller 200 will be described with reference to Fig. 11. Each step shown in Fig. 11 is performed by execution of system program 203P by processor 202 of game controller 200.

Processor 202 obtains from amplifier 205, a predetermined number of (for example, forty) current values and voltage values of vibration motor 206 (step S220). In other words, processor 202 obtains the current values and the voltage values inside vibration motor 206 to which the superimposed control data obtained by superimposition of the measurement wave on the control data has been inputted. For example, forty sets (that is, over 5 msec.) of the current value and the voltage value detected every operation cycle (for example, 0.125 ms) of amplifier 205 may be obtained in the chronological order.

Processor 202 performs processing for determining the order of the LPF (step S221). As the order of the LPF is larger, accuracy in calculation is improved. Processor 202 performs LPF processing at the order determined in step S221, on the forty current values and the forty voltage values obtained in step S220 (step S222). Processor 202 thus performs the LPF processing on the obtained current values and voltage values.

In the LPF processing, for example, a component not higher than 10 Hz is extracted from each of the forty current values (a time waveform of the current values) and the forty voltage values (a time waveform of the voltage values). Through the LPF processing, a component corresponding to the measurement wave calculated in step S205 in Fig. 9 is extracted. Though a filter in any structure may be adopted, for example, an infinite impulse response (IIR) filter or a finite impulse response (FIR) filter can be employed.

By way of example, a second-order IIR digital filter can be described in calculation equations (1) and (2) as below, with an input $x_n$ and a corresponding output $y_n$ at time n.

$$| \; u_n = x_n - a_1 u_{n-1} - a_2 u_{n-2} \qquad \ldots (1)$$

$$y_n = b_0 u_n + b_1 u_{n-1} + b_2 u_{n-2} \qquad \ldots (2)$$

$u_n$ represents a value adopted for the sake of convenience of calculation, and $a_1$, $a_2$, $b_0$, $b_1$, and $b_2$ are parameters that determine filter characteristics.

Since the IIR filter according to the equations above is the second-order filter, a fourth-order filter can be implemented by connecting two such filters in series and a sixth-order filter can be implemented by connecting three such filters in series. Connection of the IIR filters in series means use of output $y_n$ from an IIR filter in a preceding stage as input $x_n$ to an IIR filter in a subsequent stage. In implementation, at one computation timing, calculation in accordance with the calculation equations (1) and (2) is repeated two times to obtain a result of filtering by the fourth-order filter, and calculation in accordance with the calculation equations (1) and (2) is repeated three times to obtain a result of filtering by the sixth-order filter.

A fourth-order IIR filter and a sixth-order IIR filter may be employed. In this case, the IIR filters do not have to be connected in series. Specifically, an Nth-order IIR

$$u_n = x_n - a_1 u_{n-1} - \ldots - a_N u_{n-N} \qquad \ldots (3)$$

$$y_n = b_0 u_n + b_1 u_{n-1} + \ldots + b_N u_{n-N} \qquad \ldots (4)$$

The calculation equation to be used for frequency filtering is thus changed in accordance with change of the order. Change of the calculation equation may be change of the order of the calculation equation. In frequency filtering, as the set order is smaller, calculation load is low. Since the FIR filter is described in a calculation equation different from that of the IIR filter, the calculation equation is changed also when the FIR filter is changed to the IIR filter.

Though the LPF processing is described as exemplary frequency filtering, filtering processing with the use of a band pass filter or a high pass filter may be adopted. Any filter (the LPF, the high pass filter, and the band pass filter) can be used for frequency filtering.

Processor 202 calculates the resistance value based on the LPF-processed current value (the time waveform of the current values) and the LPF-processed voltage value (the time waveform of the voltage values) (step S223). Processor 202 thus calculates the resistance value inside vibration motor 206 implemented by the voice coil motor based on the current value and the voltage value subjected to the LPF processing. The resistance value calculated in step S223 is a value in each cycle (for example, 50 msec.) of execution of temperature estimation processing No. 1.

Processor 202 writes the calculated resistance value into resistance value area 204B3 (step S224). Resistance value area 204B3 is configured to store forty resistance values. In this case, resistance values calculated over two seconds (50 msec. × forty) are stored in resistance value area 204B3 in a time-series manner.

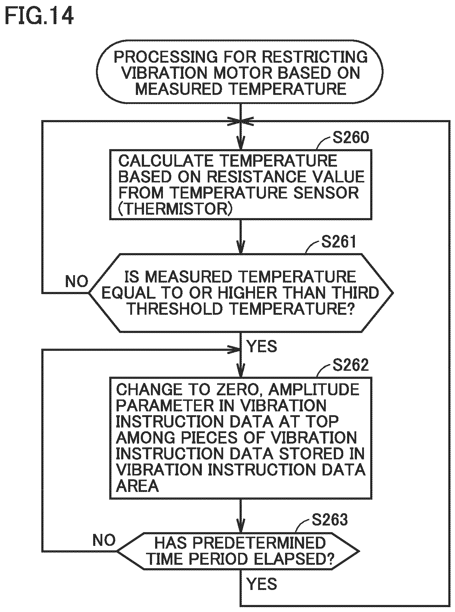

The processing shown in Fig. 11 may repeatedly be performed in predetermined execution cycles (for example, 50 msec.). The cycle of execution of the processing shown in Fig. 11 may be set to be longer than the cycle of execution of temperature measurement by temperature sensor 211 shown in Fig. 14. By setting the cycle of execution of the temperature estimation processing to be longer than the cycle of execution of temperature measurement by temperature sensor 211, load imposed on MCU 201 (processor 202) that has to perform a plurality of types of processing can be lessened while a level of temperature management is maintained.

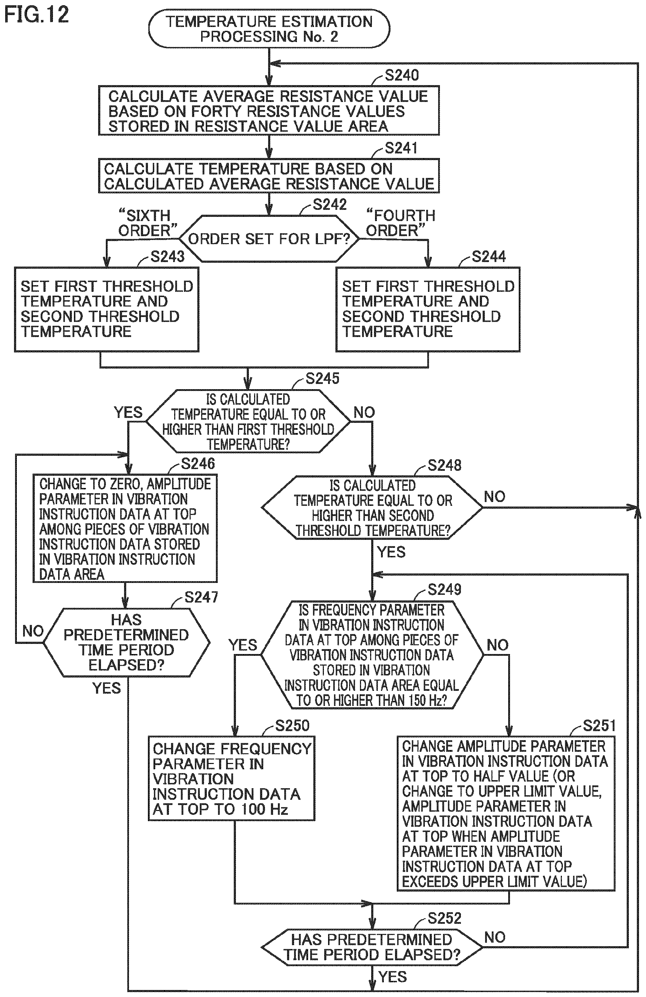

Temperature estimation processing No. 2 in game controller 200 will be described with reference to Fig. 12. Processor 202 performs temperature estimation processing No. 2 in addition to temperature estimation processing No. 1. Each step shown in Fig. 12 is performed by execution of system program 203P by processor 202 of game controller 200. Processing shown in Fig. 12 may repeatedly be performed in predetermined execution cycles (for example, 50 msec.).

Processor 202 calculates an average resistance value of forty resistance values stored in resistance value area 204B3 (step S240). Rather than the average value, another representative value such as a median value or a mode value may be adopted. Processor 202 calculates the temperature based on the calculated average resistance value (step S241). Processing for calculating the temperature based on the average resistance value may use a predetermined calculation equation or a table in which correspondence between the resistance value and the temperature is defined. As shown in step S240, processor 202 may obtain the current value and the voltage value for a predetermined period or a predetermined number of times and may calculate the resistance value a plurality of times. Processor 202 may then estimate the temperature based on the resistance values calculated the plurality of times.

Processor 202 determines the order that has been set for the LPF (step S242). When the order of the LPF has been set to the sixth order ("sixth order" in step S242), processor 202 sets a first threshold temperature and a second threshold temperature in accordance with the order (sixth order) of the LPF (step S243). In the present embodiment, the first threshold temperature is set to be larger in value than the second threshold temperature.

When the order of the LPF has been set to the fourth order ("fourth order" in step S242), processor 202 sets the first threshold temperature and the second threshold temperature in accordance with the order (fourth order) of the LPF (step S244). In the present embodiment, the first threshold temperature in the case where the order of the LPF is set to the fourth order is set to be smaller in value than the first threshold temperature in the case where the order of the LPF is set to the sixth order. The second threshold temperature in the case where the order of the LPF is set to the fourth order is set to be smaller in value than the second threshold temperature in the case where the order of the LPF is set to the sixth order.

Processor 202 determines whether or not the calculated temperature is equal to or higher than the first threshold temperature (step S245).

When the calculated temperature is equal to or higher than the first threshold temperature (YES in step S245), processor 202 changes the amplitude parameter in vibration instruction data 112 at the top among pieces of vibration instruction data 112 stored in vibration instruction data area 204B1 to zero (step S246). Processor 202 then determines whether or not a predetermined time period has elapsed (step S247). When the predetermined time period has not elapsed (NO in step S247), processing in step S246 or later is repeated. When the predetermined time period has elapsed (YES in step S247), processing in step S240 or later is repeated.

When the calculated temperature is lower than the first threshold temperature (NO in step S245), processor 202 determines whether or not the calculated temperature is equal to or higher than the second threshold temperature (step S248). When the calculated temperature is lower than the second threshold temperature (NO in step S248), processing in step S240 or later is repeated.

When the calculated temperature is equal to or higher than the second threshold temperature (YES in step S248), on the other hand, vibration of vibration motor 206 is restricted.

More specifically, processor 202 determines whether or not the frequency parameter in vibration instruction data 112 at the top among the pieces of vibration instruction data 112 stored in vibration instruction data area 204B1 is equal to or higher than 150 Hz (step S249).

When the frequency parameter in vibration instruction data 112 at the top is equal to or higher than 150 Hz (YES in step S249), processor 202 changes the frequency parameter in vibration instruction data 112 at the top to 100 Hz (step S250).

When the calculated temperature becomes equal to or larger than the predetermined value, processor 202 thus restricts vibration of vibration motor 206 implemented by the voice coil motor (S246 or S250).

When the calculated temperature becomes equal to or larger than the predetermined value, processor 202 shifts the control data for vibration of vibration motor 206 implemented by the voice coil motor to a value smaller than the indicated frequency (S250). As will be understood with reference to Fig. 6, vibration motor 206 in the present embodiment has such characteristics as being most likely to vibrate at the frequency of 100 Hz (such characteristics as being large in vibration even at a low drive voltage).

When the frequency parameter in vibration instruction data 112 at the top is lower than 150 Hz (NO in step S249), processor 202 decreases the amplitude parameter in vibration instruction data 112 at the top (for example, changes to a half value) (step S251). Processor 202 may change the amplitude parameter in vibration instruction data 112 at the top to an upper limit value only when the amplitude parameter in vibration instruction data 112 at the top exceeds the upper limit value. Restriction of vibration of vibration motor 206 thus includes processing for decreasing the amplitude of the waveform for driving vibration motor 206. Though both of a method of frequency shift and a method of reducing magnitude of the amplitude are thus adopted as the method of restricting vibration in the present embodiment, any one of them may be adopted.

Processor 202 then determines whether or not a predetermined time period has elapsed (step S252). When the predetermined time period has not elapsed (NO in step S252), processing in step S249 or later is repeated. When the predetermined time period has elapsed (YES in step S252), processing in step S240 or later is repeated.

In step S246, control data 220 present in control data area 240B2 may be changed to zero. In step S247, rather than lapse of the predetermined time period, the temperature calculated by performing again step S240 and step S241 (or the temperature measured by temperature sensor 211) reaching a predetermined threshold temperature or lower may be awaited.

When high electric power is supplied to vibration motor 206, the resistance value of vibration motor 206 instantaneously increases. Even occurrence of such instantaneous increase in resistance value less affects thermal degradation of vibration motor 206. Therefore, as shown in step S240, vibration of vibration motor 206 is restricted based on a result of averaging of the resistance values over a predetermined period. Output from vibration motor 206 can thus instantaneously be increased.

In the example where the frequency of the measurement wave is low, accuracy in estimation of the temperature is lower as a period for estimation is shorter. Therefore, accuracy in estimation of the temperature can be improved by using an average value of the plurality of resistance values over a longer period as shown in step S240.

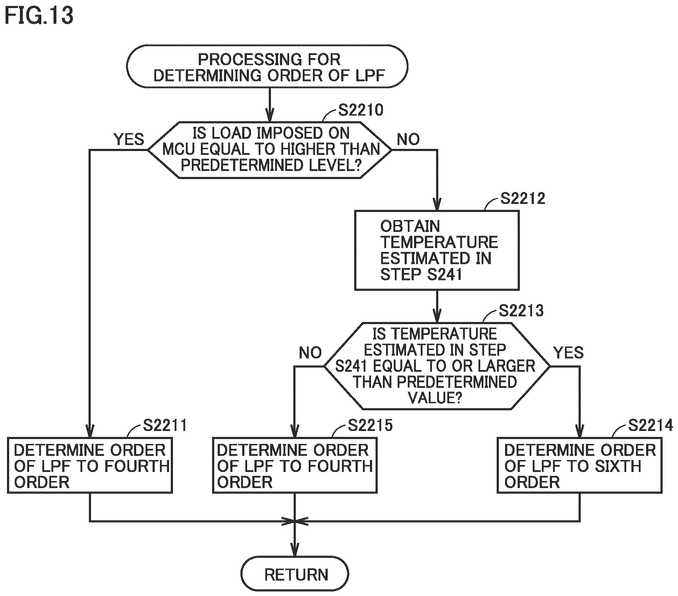

Exemplary further detailed processing in processing for determining the order of the LPF (step S221) shown in Fig. 11 will be described with reference to Fig. 13. Processor 202 determines whether or not load imposed on MCU 201 is equal to or higher than a predetermined level (step S2210). Whether or not load imposed on MCU 201 is equal to or higher than the predetermined level may be determined by adopting one or more of determination methods shown below.

(1) A rate of operation of MCU 201 is measured. When the measured rate of operation is equal to or larger than a predetermined value, load imposed on MCU 201 is determined as being equal to or higher than the predetermined level.

(2) Whether or not MCU 201 is performing predetermined processing is determined. When MCU 201 is performing the predetermined processing, load imposed on MCU 201 is determined as being equal to or higher than the predetermined level. The predetermined processing may be, for example, (a) processing of input to or output from a sensor of game controller 200 (for example, a motion sensor (acceleration sensor 208 or gyro sensor 209), a camera, a microphone, an infrared sensor, or the like), (b) processing of input to or output from an external device connected to game controller 200, or the like. At least one of the motion sensor, the camera, the microphone, and the infrared sensor may be a peripheral device connectable to game controller 200.

(3) In an example where a cycle of communication of the vibration instruction data (the control data for control of vibration) between game device 100 and game controller 200 is variable, when the cycle of communication is equal to or higher than a predetermined level (a communication rate is equal to or larger than a predetermined value, a time interval is equal to or shorter than a predetermined value, or the like), load imposed on MCU 201 is determined as being equal to or higher than the predetermined level.

When load imposed on MCU 201 is equal to or higher than the predetermined level (YES in step S2210), processor 202 sets the order of the LPF to the fourth order (step S2211). Processor 202 thus changes the order of the LPF in accordance with load imposed on MCU 201 (processor 202 that performs the LPF processing).

When load imposed on MCU 201 is lower than the predetermined level (NO in step S2210), processor 202 obtains the temperature estimated in step S241 (step S2212) and determines whether or not the estimated temperature is equal to or larger than the predetermined value (step S2213).

When the temperature estimated in step S241 is equal to or larger than the predetermined value (YES in step S2213), processor 202 sets the order of the LPF to the sixth order (step S2214). When the temperature estimated in step S241 is not equal to or larger than the predetermined value (NO in step S2213), on the other hand, processor 202 sets the order of the LPF to the fourth order (step S2215). Processor 202 thus changes the order of the LPF in accordance with the estimated temperature.

The temperature estimation processing imposes large load on MCU 201. Therefore, by changing the order of the LPF that determines magnitude of load necessary for execution in accordance with load imposed on MCU 201 as shown in step S2210, influence on another type of processing to be performed by MCU 201 can be lessened.

A processor lower in performance than the processor in the game device may be employed as the processor in the game controller. In such a case, load imposed on the processor in the game controller should be lowered.

When the temperature attains to a predetermined value or larger as shown in step S2213, the order of the LPF is increased to improve accuracy in estimation of the temperature. When it is not the case, on the other hand, necessity for accuracy in estimation of the temperature is low, and hence the order of the LPF is decreased to lower load necessary for processing. Thus, in a situation where accuracy in estimation of the temperature is not required, load necessary for execution is lowered so that even MCU 201 limited in processing resource can perform a plurality of types of processing in parallel.

A specific numerical value of the order is merely by way of example. In step S2211, for example, the order may be decreased from the fifth order to the third order, or the order may be decreased from the sixth order to the fifth order. The order (the order set in S2211) when load imposed on MCU 201 is high and the order (the order set in S2215) when the estimated temperature is low may be different from each other.

Processing in step S2211 may be performed only when the estimated temperature is lower than the predetermined value. The predetermined value to be used for determination as to whether or not to perform the processing in step S2211 may be set to be higher than the temperature to be used for determination in step S2213. Thus, accuracy in estimation of the temperature may be improved only when the temperature becomes equal to or higher than the predetermined value, and load imposed on MCU 201 may be prevented from increasing when the temperature is lower than the predetermined value.

Processing for decreasing the order of the LPF when load imposed on MCU 201 is equal to or higher than the predetermined level or when the temperature is lower than the predetermined value may be applicable also to an example where the FIR filter is employed as the LPF.

Change from the FIR filter to the IIR filter may be made when load imposed on MCU 201 is equal to or higher than the predetermined level. Change from the FIR filter to the IIR filter may be made when the temperature is lower than the predetermined value. At this time, the order in the calculation equation of the FIR filter may be the same as the order in the calculation equation of the IIR filter. In general, the IIR filter can achieve a greater filtering effect with the lower order (that is, lower calculation load) than the FIR filter.

(f3: Temperature Measurement Processing and Vibration Motor Restriction Processing with Temperature Sensor)

The temperature is measured with temperature sensor 211 in game controller 200. Vibration of vibration motor 206 may be restricted based on the measured temperature.

Exemplary processing for restricting vibration motor 206 based on a measured temperature in game controller 200 according to the present embodiment will be described with reference to Fig. 14. Each step shown in Fig. 14 is performed by execution of system program 203P by processor 202 of game controller 200. Processing shown in Fig. 14 may repeatedly be performed in predetermined execution cycles (for example, 5 msec.). A measurement cycle in the temperature measurement processing with temperature sensor 211 is thus shorter than an estimation cycle in the temperature estimation processing.

Processor 202 calculates the temperature based on the resistance value from temperature sensor 211 (thermistor) (step S260). Specifically, processor 202 measures the temperature with temperature sensor 211 arranged outside vibration motor 206.

Processor 202 determines whether or not the temperature measured with temperature sensor 211 is equal to or higher than a third threshold temperature (step S261). When the measured temperature is lower than the third threshold temperature (NO in step S261), processing in step S260 or later is repeated. In the present embodiment, the third threshold temperature is set to be lower in value than the first threshold temperature.

When the calculated temperature is equal to or higher than the third threshold temperature (YES in step S261), processor 202 changes the amplitude parameter in vibration instruction data 112 at the top among the pieces of data stored in vibration instruction data area 204B1 to zero (step S262). Processor 202 then determines whether or not a predetermined time period has elapsed (step S263). When the predetermined time period has not elapsed (NO in step S263), processing in step S262 or later is repeated. When the predetermined time period has elapsed (YES in step S263), processing in step S260 or later is repeated.

In step S262, rather than changing the amplitude parameter to zero, the amplitude parameter may be reduced or the frequency parameter may be shifted as shown in steps S246 and S250 (see Fig. 12). Processor 202 thus restricts vibration of vibration motor 206 implemented by the voice coil motor (S262) when the temperature measured with temperature sensor 211 becomes equal to or larger than the predetermined value.

As shown in Fig. 14, when the temperature measured with temperature sensor 211 attains to the third threshold temperature or higher, processor 202 restricts vibration of vibration motor 206. Since the execution cycle to perform the processing shown in Fig. 14 is set, for example, to 5 msec., the cycle (5 msec.) of temperature measurement with temperature sensor 211 is shorter than the cycle (the execution cycle to perform the processing shown in Fig. 12 being set, for example, to 50 msec.) of calculation of the temperature based on the current value and the voltage value of vibration motor 206. By thus making the execution cycles different from each other, frequency to perform the temperature estimation processing which imposes great load on MCU 201 can be lowered.

[G. Calibration of Temperature-Resistance Value Characteristic]

In the temperature estimation processing based on the resistance value of vibration motor 206 as described above, change in resistance value with the predetermined temperature (which will also be referred to as a "temperature-resistance value characteristic" below) may be referred to. The resistance value of vibration motor 206 may be affected by manufacturing tolerance. Therefore, in order to enhance accuracy in estimation of the temperature, calibration is preferable.

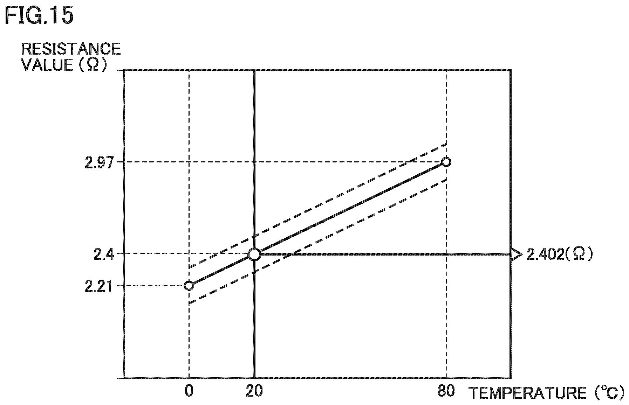

An exemplary temperature-resistance value characteristic of the vibration motor will be described with reference to Fig. 15. As shown in Fig. 15, magnitude of an intercept may vary depending on manufacturing tolerance. Calibration may include determination of magnitude of the intercept. By way of example, magnitude of the intercept at 20°C (that is, the resistance value of vibration motor 206 at 20°C (which will also be referred to as "R20" below)) may be determined.

A specific procedure of calibration includes steps as below.

(1) The temperature is measured with temperature sensor 211 (for example, the thermistor). An average value obtained by a plurality of times of measurement may be adopted.

(2) A pilot signal is provided from amplifier 205 to vibration motor 206 to obtain the current value and the voltage value of vibration motor 206. The resistance value is calculated based on the current value and the voltage value. An average value obtained by a plurality of times of calculation may be adopted.

(3) The resistance value (R20) of vibration motor 206 at 20°C is calculated in accordance with an expression below, based on the temperature measured in (1) (or the average value of the temperatures) (which will also be referred to as "T" below) and the resistance value calculated in (2) (or the average value of the resistance values) (which will also be referred to as "RT" below). A value calculated by subtracting the resistance value (for example, a predetermined constant) of a line between the vibrator of vibration motor 206 and amplifier 205 from the resistance value calculated in (2) may be adopted as RT. $\alpha t$ in the expression represents a winding temperature coefficient.

$$R20 = RT/\{1+\alpha t(T-20)\}$$

The resistance value (R20) of vibration motor 206 at 20°C is stored, for example, in non-volatile memory 203 of game controller 200. In the temperature estimation processing, the resistance value (R20) stored in non-volatile memory 203 is referred to. In other words, calculation of the resistance value (R20) means calibration of the temperature estimation processing.

Calibration of the temperature-resistance value characteristic may be performed in a production facility where game controller 200 is manufactured or a repair department. Alternatively, a program for performing calibration may be stored in game controller 200, and calibration may be performed in game controller 200 when a predetermined condition is satisfied.

[H. Modification]

Though game controller 200 is described as an exemplary device above, the configuration and the processing described above are applicable also to another device such as a smartphone, a tablet, or a portable game console.

In the description above, though the temperature measurement processing by temperature sensor 211, the temperature estimation processing based on the current value and the voltage value of vibration motor 206, and restriction processing for restricting vibration motor 206 are performed by execution of the program (for example, system program 203P) by MCU 201 (or processor 202) of game controller 200, a part or the entirety of these types of processing may be performed by execution of the program by processor 101 of game device 100.

Though exemplary processing in which the game program by way of example of the application program generates the vibration instruction data is shown in the description above, any application program can generate the vibration instruction data, without being limited to the game program.

The temperature measurement processing with temperature sensor 211 and the temperature estimation processing based on the current value and the voltage value of vibration motor 206 may be performed in any order. In other words, one of the temperature measurement processing and the temperature estimation processing may be performed first, or two types of processing may be performed in parallel. Consequently, the restriction processing based on the temperature measurement processing and the restriction processing based on the temperature estimation processing may also be performed in any order.

Though Fig. 1 shows an exemplary configuration in which game device 100 includes a single processor 101, game device 100 may include a plurality of processors 101. Similarly, though an exemplary configuration in which MCU 201 of game controller 200 includes a single processor 202 is shown, MCU 201 may include a plurality of processors 202.

Though Fig. 1 shows an exemplary configuration in which game device 100 includes a single non-volatile memory 102 and a single volatile memory 103, game device 100 may include a plurality of non-volatile memories 102 and/or a plurality of volatile memories 103. Similarly, an exemplary configuration in which MCU 201 of game controller 200 includes a single non-volatile memory 203 and a single volatile memory 204 is shown, MCU 201 may include a plurality of non-volatile memories 203 and/or a plurality of volatile memories 204.

Though an exemplary configuration in which processing is performed as being allocated between processor 101 of game device 100 and MCU 201 (processor 202) of game controller 200 is described above, only processor 101 of game device 100 (or MCU 201 (processor 202) of game controller 200) may perform the processing.

Allocation of the processing between processor 101 of game device 100 and MCU 201 (processor 202) of game controller 200 is by way of example, and processing may freely be allocated therebetween. For example, the processing for generating control data 220 may be performed in game device 100.

The program encompasses a source code, an intermediate code, an object code, a native code, a script, and the like, and a type of the code is not limited. The program may run on an interpreter or an emulator.

The program may be executed by a single processor or parts of a program may be executed by different processors. Functions in the present embodiment may be performed by a plurality of divided programs, and in this case, an assembly of the plurality of programs may be defined as the program.

The functions in the present embodiment do not have to be performed only by processing by the processor, and may be performed by using various functions of a computer (a main processor, a memory, a sub processor, a peripheral circuit, software such as firmware, and a computer implemented by an interpreter or an emulator in some cases). For example, a manner in which the processor executes the program to provide an instruction to other processors, peripheral circuits, and the like and finally those other processors, peripheral circuits, and the like perform the functions is also encompassed in a mode of carrying out the present embodiment.

A system obtained by integrating game device 100 and game controller 200 may be applicable. A manner in which processing performed by a single processor in the present embodiment is performed as being allocated to a plurality of processors in cooperation is also encompassed herein as a modification.

While certain example systems, methods, devices and apparatuses have been described herein, it is to be understood that the appended claims are not to be limited to the systems, methods, devices and apparatuses disclosed, but on the contrary, are intended to cover various modifications and equivalent arrangements included within the spirit and scope of the appended claims.

**Claims**

1. A system (10) comprising a device comprising a vibration motor (206), the system comprising:

   a thermistor (211) arranged outside the vibration motor and in vicinity of the vibration motor in the device;
   temperature measurement processing means (S260) configured to perform processing for measuring a temperature with the thermistor;
   temperature estimation processing means (S240, S241) configured to perform processing for obtaining a current value and a voltage value of the vibration motor and estimating a temperature inside the vibration motor based on the obtained current value and voltage value; and
   restriction means (S246, S251, S262) configured to perform processing for restricting vibration of the vibration motor based on a first temperature which is the temperature measured by the temperature measurement processing means and a second temperature which is the temperature estimated by the temperature estimation processing means.

2. The system according to claim 1, wherein
   the restriction means comprises

first restriction means (S261, S262) configured to perform processing for restricting vibration of the vibration motor by comparing the first temperature and a first threshold value, and
second restriction means (S245, S246; S248, S251) configured to perform processing for restricting vibration of the vibration motor by comparing the second temperature and a second threshold value different from the first threshold value.

3. The system according to claim 2, wherein
the second threshold value is larger than the first threshold value.

4. The system according to claim 2 or 3, wherein
details of the processing for restricting vibration by the first restriction means are different from details of the processing for restricting vibration by the second restriction means.

5. The system according to any of claims 1 to 4, wherein
in the device, the thermistor and the vibration motor are arranged on the same side, with a substrate (213) where an electronic component is to be arranged being defined as a reference.

6. The system according to claim 5, wherein
in the device, the thermistor and the vibration motor are arranged below the substrate.

7. The system according to any of claims 1 to 6, wherein
in the device, the thermistor and the vibration motor are arranged on the same surface of a substrate (213) where an electronic component is to be arranged.

8. The system according to claim 7, wherein
in the device, a predetermined electronic component is to be arranged at an opposite surface of the substrate.

9. The system according to claim 8, wherein
the predetermined electronic component comprises an operation switch (210).

10. The system according to any of claims 7 to 9, wherein
the surface on which the thermistor and the vibration motor are arranged is a rear surface of the substrate.

11. The system according to claim 10, wherein
the vibration motor is arranged as being in contact with a rear housing of the device.

12. The system according to claim 11, wherein
the vibration motor is in contact with the substrate through a cushion material (214).

13. The system according to any of claims 1 to 12, wherein
a cycle of measurement by the temperature measurement processing means is shorter than a cycle of estimation by the temperature estimation processing means.

14. A program configured to cause a computer to function as the temperature measurement processing means, the temperature estimation processing means, and the restriction means according to any of claims 1 to 13.

15. An information processing method of controlling a device comprising a vibration motor, the information processing method comprising:

performing processing (S260) for measuring a temperature with a thermistor arranged outside the vibration motor and in vicinity of the vibration motor in the device;
performing processing (S240, S241) for obtaining a current value and a voltage value of the vibration motor and estimating a temperature inside the vibration motor based on the obtained current value and voltage value; and
performing processing (S246, S251, S262) for restricting vibration of the vibration motor based on a first temperature which is the measured temperature and a second temperature which is the estimated temperature.

16. The information processing method according to claim 15, wherein
the performing processing for restricting vibration comprises

# EP 4 580 037 A1

performing processing (S261, S262) for restricting vibration of the vibration motor by comparing the first temperature and a first threshold value, and

performing processing (S245, S246; S248, S251) for restricting vibration of the vibration motor by comparing the second temperature and a second threshold value different from the first threshold value.

17. The information processing method according to claim 16, wherein the second threshold value is larger than the first threshold value.

18. A calibration method of calibrating the temperature estimation processing means according to any of claims 1 to 13, the calibration method comprising:

measuring a temperature with the thermistor;
obtaining a current value and a voltage value of the vibration motor;
calculating a resistance value based on the obtained current value and voltage value; and
performing calibration on the temperature measurement processing means based on the measured temperature and the calculated resistance value.

FIG.1

FIG.2

FIG.3

200

218

210

213

214

206M

206

211

216

212

206C

206M

215

FIG.4A

FIG.4B

## FIG.5

| VIBRATION EVENT | AMPLITUDE VALUE | FREQUENCY | THE NUMBER OF WAVELENGTHS |
|---|---|---|---|
| VIBRATION EVENT 1 | 0.5 | 100 | 1 |
| VIBRATION EVENT 2 | 0.8 | 50 | 1 |
| VIBRATION EVENT 3 | 1 | 50 | 2 |
| ⋮ | ⋮ | ⋮ | ⋮ |

105

⟹

114

TIME-SERIES VIBRATION INSTRUCTION DATA GROUP

116 — (0.5, 100), (0.5, 100) — 116

(0.8, 50), (0.8, 50), (0.8, 50), (0.8, 50)

(1, 50), (1, 50), (1, 50), (1, 50),
(1, 50), (1, 50), (1, 50), (1, 50)

⋮

⟱

110

TIME-SERIES VIBRATION INSTRUCTION DATA GROUP

112 — (2.5, 100), (2.5, 100) — 112

(4.16,50), (4.16,50), (4.16,50), (4.16,50)

(5.2,50), (5.2,50), (5.2,50), (5.2,50),
(5.2,50), (5.2,50), (5.2,50), (5.2,50)

⋮

FIG.6

FIG.7

GAME PROGRAM

S100
PERFORM GAME PROCESSING

S101
HAS VIBRATION
EVENT OCCURRED?　NO

YES
S102
PASS TIME-SERIES VIBRATION
INSTRUCTION DATA GROUP
CORRESPONDING TO VIBRATION
EFFECT TO SYSTEM PROGRAM

S103
PERFORM OTHER GAME
PROCESSING

## FIG.8

SYSTEM PROGRAM

S150
SELECT ONE OF PIECES OF VIBRATION INSTRUCTION DATA INCLUDED IN TIME-SERIES VIBRATION INSTRUCTION DATA GROUP PASSED FROM GAME PROGRAM

S151
"SIXTH ORDER" — ORDER SET FOR LPF? — "FOURTH ORDER"

S152
SET LOWER LIMIT VALUE TO 40 Hz

S153
SET LOWER LIMIT VALUE TO 50 Hz

S154
IS FREQUENCY PARAMETER IN SELECTED VIBRATION INSTRUCTION DATA EQUAL TO OR SMALLER THAN LOWER LIMIT VALUE? — NO

YES
S155
CHANGE FREQUENCY PARAMETER TO LOWER LIMIT VALUE

S156
DETERMINE MAXIMUM ALLOWABLE VOLTAGE IN ACCORDANCE WITH FREQUENCY PARAMETER IN SELECTED VIBRATION INSTRUCTION DATA

S157
CALCULATE VOLTAGE AMPLITUDE VALUE BY MULTIPLYING AMPLITUDE PARAMETER IN SELECTED VIBRATION INSTRUCTION DATA BY MAXIMUM ALLOWABLE VOLTAGE

S158
WRITE SET OF CALCULATED VOLTAGE AMPLITUDE VALUE (AMPLITUDE PARAMETER) AND FREQUENCY PARAMETER IN SELECTED VIBRATION INSTRUCTION DATA INTO VIBRATION INSTRUCTION DATA AREA

S159
NO — HAVE ALL PIECES OF VIBRATION INSTRUCTION DATA INCLUDED IN TIME-SERIES VIBRATION INSTRUCTION DATA GROUP PASSED FROM GAME PROGRAM BEEN PROCESSED?

YES

END

FIG.9

PROCESSING FOR
GENERATING CONTROL DATA

S200
IS THERE DATA IN
VIBRATION INSTRUCTION
DATA AREA? — NO

↓ YES

S201
OBTAIN VIBRATION
INSTRUCTION DATA

S202
X←1

S203
CALCULATE PHASE ADVANCED BY ONE CONTROL
CYCLE FROM PHASE IN CURRENT CONTROL DATA
BASED ON FREQUENCY PARAMETER IN OBTAINED
VIBRATION INSTRUCTION DATA

S204
CALCULATE CONTROL DATA (VOLTAGE VALUE)
BASED ON AMPLITUDE PARAMETER IN OBTAINED
VIBRATION INSTRUCTION DATA AND CALCULATED
PHASE

S205
CALCULATE VOLTAGE VALUE OF MEASUREMENT
WAVE (HAVING AMPLITUDE VALUE OF 0.1 V AND
FREQUENCY OF 10 Hz) BASED ON CALCULATED
PHASE

S206
ADD CALCULATED CONTROL DATA (VOLTAGE
VALUE) AND VOLTAGE VALUE OF CALCULATED
MEASUREMENT WAVEFORM

S207
WRITE RESULT OF ADDITION (CONTROL DATA
OBTAINED BY ADDITION OF VOLTAGE OF
MEASUREMENT WAVEFORM) INTO CONTROL DATA
AREA

S208
X←X+1

S209
X > 40? — NO

↓ YES

S210
DELETE OBTAINED VIBRATION INSTRUCTION
DATA FROM VIBRATION INSTRUCTION DATA AREA

28

**FIG.10**

$$\text{PROCESSING FOR GENERATING CONTROL DATA}$$

S200

IS THERE DATA IN VIBRATION INSTRUCTION DATA AREA? — NO

YES / S201

OBTAIN VIBRATION INSTRUCTION DATA

S202

$X \leftarrow 1$

S203

CALCULATE PHASE ADVANCED BY ONE CONTROL CYCLE FROM PHASE IN CURRENT CONTROL DATA BASED ON FREQUENCY PARAMETER IN OBTAINED VIBRATION INSTRUCTION DATA

S204

CALCULATE CONTROL DATA (VOLTAGE VALUE) BASED ON AMPLITUDE PARAMETER IN OBTAINED VIBRATION INSTRUCTION DATA AND CALCULATED PHASE

S214

DETERMINE AMPLITUDE OF MEASUREMENT WAVE BASED ON AMPLITUDE PARAMETER IN OBTAINED VIBRATION INSTRUCTION DATA

S215

CALCULATE VOLTAGE VALUE OF MEASUREMENT WAVE (HAVING DETERMINED AMPLITUDE VALUE AND FREQUENCY OF 10 Hz) BASED ON CALCULATED PHASE

S206

ADD CALCULATED CONTROL DATA (VOLTAGE VALUE) AND VOLTAGE VALUE OF CALCULATED MEASUREMENT WAVEFORM

S207

WRITE RESULT OF ADDITION (CONTROL DATA OBTAINED BY ADDITION OF VOLTAGE OF MEASUREMENT WAVEFORM) INTO CONTROL DATA AREA

S208

$X \leftarrow X + 1$

S209

$X > 40?$ — NO

YES

S210

DELETE OBTAINED VIBRATION INSTRUCTION DATA FROM VIBRATION INSTRUCTION DATA AREA

FIG.11

```
        ┌──────────────────────────────┐
        │  TEMPERATURE ESTIMATION      │
        │     PROCESSING No. 1         │
        └──────────────────────────────┘
                      │
                      ▼                    ╭S220
        ┌──────────────────────────────┐
        │ OBTAIN PREDETERMINED NUMBER  │
        │ OF (FOR EXAMPLE, FORTY) CURRENT │
        │ VALUES AND VOLTAGE VALUES    │
        │ FROM AMPLIFIER               │
        └──────────────────────────────┘
                      │
                      ▼                    ╭S221
        ╔══════════════════════════════╗
        ║ PROCESSING FOR DETERMINING   ║
        ║ ORDER OF LPF                 ║
        ╚══════════════════════════════╝
                      │
                      ▼                    ╭S222
        ┌──────────────────────────────┐
        │ PERFORM LPF PROCESSING AT    │
        │ DETERMINED ORDER ON FORTY    │
        │ OBTAINED CURRENT VALUES AND  │
        │ FORTY OBTAINED VOLTAGE VALUES│
        └──────────────────────────────┘
                      │
                      ▼                    ╭S223
        ┌──────────────────────────────┐
        │ CALCULATE RESISTANCE VALUES  │
        │ BASED ON LPF-PROCESSED       │
        │ CURRENT VALUES AND VOLTAGE   │
        │ VALUES                       │
        └──────────────────────────────┘
                      │
                      ▼                    ╭S224
        ┌──────────────────────────────┐
        │ WRITE CALCULATED RESISTANCE  │
        │ VALUES INTO RESISTANCE VALUE │
        │ AREA                         │
        └──────────────────────────────┘
```

**FIG.12**

TEMPERATURE ESTIMATION
PROCESSING No. 2

S240
CALCULATE AVERAGE RESISTANCE VALUE
BASED ON FORTY RESISTANCE VALUES
STORED IN RESISTANCE VALUE AREA

S241
CALCULATE TEMPERATURE BASED ON
CALCULATED AVERAGE RESISTANCE VALUE

S242
"SIXTH ORDER" ← ORDER SET FOR LPF? → "FOURTH ORDER"

S243
SET FIRST THRESHOLD
TEMPERATURE AND
SECOND THRESHOLD
TEMPERATURE

S244
SET FIRST THRESHOLD
TEMPERATURE AND
SECOND THRESHOLD
TEMPERATURE

S245
IS CALCULATED
TEMPERATURE EQUAL TO OR
HIGHER THAN FIRST THRESHOLD
TEMPERATURE?
YES / NO

S246
CHANGE TO ZERO, AMPLITUDE
PARAMETER IN VIBRATION
INSTRUCTION DATA AT TOP
AMONG PIECES OF VIBRATION
INSTRUCTION DATA STORED
IN VIBRATION INSTRUCTION
DATA AREA

S248
IS CALCULATED
TEMPERATURE EQUAL TO OR
HIGHER THAN SECOND
THRESHOLD TEMPERATURE?
NO
YES

S247
HAS
PREDETERMINED
TIME PERIOD
ELAPSED?
NO / YES

S249
IS FREQUENCY PARAMETER
IN VIBRATION INSTRUCTION
DATA AT TOP AMONG PIECES OF
VIBRATION INSTRUCTION DATA
STORED IN VIBRATION
INSTRUCTION DATA AREA EQUAL
TO OR HIGHER THAN 150 Hz?
YES / NO

S250
CHANGE FREQUENCY
PARAMETER IN
VIBRATION
INSTRUCTION DATA
AT TOP TO 100 Hz

S251
CHANGE AMPLITUDE PARAMETER
IN VIBRATION INSTRUCTION DATA
AT TOP TO HALF VALUE (OR
CHANGE TO UPPER LIMIT VALUE,
AMPLITUDE PARAMETER IN
VIBRATION INSTRUCTION DATA
AT TOP WHEN AMPLITUDE
PARAMETER IN VIBRATION
INSTRUCTION DATA AT TOP
EXCEEDS UPPER LIMIT VALUE)

S252
HAS PREDETERMINED
TIME PERIOD ELAPSED?
NO / YES

FIG.13

```
            ┌─────────────────────────────┐
            │      PROCESSING FOR         │
            │ DETERMINING ORDER OF LPF    │
            └─────────────────────────────┘
                         │
                         ▼        ⌐S2210
         ┌───────────────────────────────────┐
    YES  │        IS LOAD IMPOSED ON         │  NO
  ◄──────┤   MCU EQUAL TO HIGHER THAN        ├──────┐
         │    PREDETERMINED LEVEL?           │      │
         └───────────────────────────────────┘      │
                                                     ▼       ⌐S2212
                                          ┌────────────────────┐
                                          │ OBTAIN             │
                                          │ TEMPERATURE        │
                                          │ ESTIMATED IN       │
                                          │ STEP S241          │
                                          └────────────────────┘
                                                     │
                                                     ▼       ⌐S2213
                                          ┌────────────────────────┐
                                     NO   │   IS TEMPERATURE       │  YES
                                   ◄──────┤  ESTIMATED IN STEP     ├──────┐
                                          │ S241 EQUAL TO OR LARGER│      │
                                          │  THAN PREDETERMINED    │      │
                                          │       VALUE?           │      │
                                          └────────────────────────┘      │
```

⌐S2211                    ⌐S2215                              ⌐S2214

| DETERMINE ORDER | | DETERMINE ORDER | | DETERMINE ORDER |
|---|---|---|---|---|
| OF LPF TO FOURTH | | OF LPF TO FOURTH | | OF LPF TO SIXTH |
| ORDER | | ORDER | | ORDER |

```
                    ┌──────────┐
                    │  RETURN  │
                    └──────────┘
```

FIG.14

```
      ╭─────────────────────────────╮
      │  PROCESSING FOR RESTRICTING  │
      │  VIBRATION MOTOR BASED ON    │
      │  MEASURED TEMPERATURE        │
      ╰─────────────────────────────╯
```

S260

CALCULATE TEMPERATURE
BASED ON RESISTANCE VALUE
FROM TEMPERATURE SENSOR
(THERMISTOR)

S261

NO — IS MEASURED TEMPERATURE
EQUAL TO OR HIGHER THAN THIRD
THRESHOLD TEMPERATURE?

YES

S262

CHANGE TO ZERO, AMPLITUDE
PARAMETER IN VIBRATION
INSTRUCTION DATA AT TOP
AMONG PIECES OF VIBRATION
INSTRUCTION DATA STORED IN
VIBRATION INSTRUCTION DATA
AREA

S263

NO — HAS PREDETERMINED
TIME PERIOD ELAPSED?

YES

FIG.15

RESISTANCE VALUE (Ω)

2.97

2.4 ............................................> 2.402(Ω)

2.21

0        20                    80    TEMPERATURE (℃)

Europäisches
Patentamt

European
Patent Office

Office européen
des brevets

## EUROPEAN SEARCH REPORT

Application Number

EP 24 22 2905

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2023/199384 A1 (ROBERTO MILES K [US] ET AL) 22 June 2023 (2023-06-22) * abstract; figures 1-4 * * paragraph [0003] - paragraph [0038] * ----- | 1,5-15, 18 | INV. H02P25/032 H02P29/032 H02P29/64 |
| Y | US 2014/169571 A1 (POLLEROS ROBERT [US]) 19 June 2014 (2014-06-19) * abstract; figures 1-3 * * paragraph [0009] - paragraph [0034] * ----- | 1,14,15, 18 | |
| Y | US 2017/354870 A1 (OKAMURA TAKANORI [JP]) 14 December 2017 (2017-12-14) * abstract; figures 1-25 * ----- | 5-13 | |

TECHNICAL FIELDS
SEARCHED      (IPC)

H02P

The present search report has been drawn up for all claims

| Place of search | Date of completion of the search | Examiner |
|---|---|---|
| Munich | 2 May 2025 | Zeng, Wenyan |

EPO FORM 1503 03.82 (P04C01)

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

## ANNEX TO THE EUROPEAN SEARCH REPORT
## ON EUROPEAN PATENT APPLICATION NO.

EP 24 22 2905

This annex lists the patent family members relating to the patent documents cited in the above-mentioned European search report.
The members are as contained in the European Patent Office EDP file on
The European Patent Office is in no way liable for these particulars which are merely given for the purpose of information.

02-05-2025

| Patent document cited in search report | Publication date | Patent family member(s) | | Publication date |
|---|---|---|---|---|
| US 2023199384 A1 | 22-06-2023 | CN | 118476245 A | 09-08-2024 |
| | | GB | 2626267 A | 17-07-2024 |
| | | US | 2023199384 A1 | 22-06-2023 |
| US 2014169571 A1 | 19-06-2014 | CN | 103873985 A | 18-06-2014 |
| | | US | 9510101 B1 | 29-11-2016 |
| | | US | 2014169571 A1 | 19-06-2014 |
| | | US | 2017150284 A1 | 25-05-2017 |
| | | US | 2018160245 A1 | 07-06-2018 |
| US 2017354870 A1 | 14-12-2017 | EP | 3254739 A1 | 13-12-2017 |
| | | US | 2017354870 A1 | 14-12-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2016202486 A